# EUROPEAN PATENT APPLICATION

(11) **EP 4 137 547 A1**
(43) Date of publication of application: **22.02.2023**
(21) Application number: 21789500.2
(22) Date of filing: 02.04.2021
(51) Int. Cl.: C09D 183/04, C09K 3/18

(54) **SURFACE TREATMENT AGENT INCLUDING FLUOROPOLYETHER GROUP?CONTAINING POLYMER AND/OR PARTIAL (HYDROLYSIS) CONDENSATE OF SAME, AND ARTICLE**

(30) Priority: 14.04.2020 JP 2020072033
(71) Applicant: SHIN-ETSU CHEMICAL CO., LTD., Tokyo 1000005 (JP)
(72) Inventor: SAKOH, Ryusuke, Annaka-shi, Gunma 379-0224 (JP); UCHIDA, Takashi, Annaka-shi, Gunma 379-0224 (JP)
(74) Representative: Ter Meer Steinmeister & Partner
(86) International application number: PCT/JP2021/014266
(87) International publication number: WO 2021/210420

(57) **Abstract**

A surface treatment agent that includes a fluoropolyether group-containing polymer represented by general formula (1) and/or a partial (hydrolysis) condensate of a fluoropolyether group-containing polymer represented by general formula (1). The surface treatment agent makes it possible to form a cured coating film that has excellent water and oil repellence, excellent abrasion resistance, and a high coefficient of dynamic friction.

Rf-[CH(V)₂]_{α} (1)

(In the formula, Rf is a mono- or bivalent fluorooxyalkylene group-containing polymer residue that includes a group represented by -(C₃F₆O)_{d}- (the repeating unit C₃F₆O having a branched structure, and d being an integer from 2 to 200), V is a monovalent group that does not include a polar group but independently includes a terminal hydroxyl group-containing silyl group or hydrolyzable silyl group, and α is 1 or 2.)

## Description

### TECHNICAL FIELD

This invention relates to a surface treating agent comprising a fluoropolyether-containing polymer (or compound having a monovalent or divalent fluorooxyalkylene-containing polymer residue in the molecule) and/or a partial (hydrolytic) condensate thereof, and more particularly, to a surface treating agent comprising a fluoropolyether-containing polymer capable of forming a coating having improved water/oil repellency, abrasion resistance and slip resistance and/or a partial (hydrolytic) condensate thereof, and an article having a surface treated with the surface treating agent.

### BACKGROUND ART

Recently, there is an accelerating demand to mount touch panels as the screen on mobile phones and other displays. While the touch panel has a screen kept bare, there are many chances of the finger or cheek coming in direct contact with the screen. Undesirably the touch panel is readily fouled with stains like sebum. There is an annually increasing need for the technology to attain fingerprint proofness or easy stain removal on a display surface for better appearance or visibility. It is thus desired to have a material capable of meeting these requirements. Recently, it has been a problem that stains like sebum is likely to adhere not only to the display surface but also to a housing, and it is desired to provide a water/oil repellent layer for both the display and the housing. Prior art water/oil repellent layers have high water/oil repellency and easy stain wipe-off, but suffer from the problem that the anti-fouling performance deteriorates during service.

Generally, fluoropolyether-containing compounds exhibit, by virtue of their extremely low surface free energy, water/oil repellency, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 (JP-T 2008-534696, JP-T 2008-537557, JP-A 2012-072272, JP-A 2012-157856, JP-A 2013-136833, JP-A 2015-199906) disclose a composition comprising a fluoropolyether-containing polymer which is obtained by introducing a hydrolyzable silyl group into a fluoropolyether-containing compound, the composition being tightly adherent to the substrate surface and capable of forming a coating with water/oil repellency, chemical resistance, lubricity, parting, anti-fouling and other properties on the substrate surface.

Cured films such as glass substrate surface surface treated with the composition comprising the fluoropolyether-containing polymer obtained by introducing a hydrolyzable silyl group into a fluoropolyether-containing compound have improved abrasion durability with steel wool, but have high slipperiness. Therefore, there is no problem in display applications, but there is a risk that a smart phone may slip too much in the housing and fall during use, for example.

### PRIOR ART DOCUMENTS

### PATENT DOCUMENTS

Patent Document 1: JP-T 2008-534696
Patent Document 2: JP-T 2008-537557
Patent Document 3: JP-A 2012-072272
Patent Document 4: JP-A 2012-157856
Patent Document 5: JP-A 2013-136833
Patent Document 6: JP-A 2015-199906

### SUMMARY OF INVENTION

### TECHNICAL PROBLEM

An object of the invention, which has been made under the above-mentioned circumstances, is to provide a surface treating agent comprising a fluoropolyether-containing polymer capable of forming a cured film having improved water/oil repellency and abrasion resistance and a high dynamic friction coefficient and/or a partial (hydrolytic) condensate thereof, and an article having a surface treated with the surface treating agent.

### SOLUTION TO PROBLEM

Making extensive investigations to attain the above object, the inventors have found that among the foregoing fluoropolyether-containing polymers, a surface treating agent comprising a fluoropolyether-containing polymer having a hydroxy-containing silyl group or hydrolyzable silyl group, having the general formula (1), shown below, especially a fluoropolyether-containing polymer having a hydroxy-containing silyl group or hydrolyzable silyl group, having the general formula (2), shown below, and/or a partial (hydrolytic) condensate thereof can form a cured film having improved water/oil repellency and steel wool abrasion resistance and a high dynamic friction coefficient. The invention is predicated on this finding.

Accordingly, the invention provides a surface treating agent and an article comprising a fluoropolyether-containing polymer (or compound having a monovalent or divalent fluorooxyalkylene-containing polymer residue in the molecule) and/or a partial (hydrolytic) condensate thereof as defined below.
[1] A surface treating agent comprising a fluoropolyether-containing polymer having the following general formula (1):

   Rf-[CH(V)₂]_{α} (1)

   wherein Rf is a monovalent or divalent fluorooxyalkylene-containing polymer residue containing a group having -(C₃F₆O)_{d}- (repeating unit C₃F₆O has a branched structure, and d is an integer of 2 to 200), V is independently a monovalent group having a hydroxy-containing silyl group or hydrolyzable silyl group at an end and free of polar group other than the hydroxy-containing silyl group and the hydrolyzable silyl group, and α is 1 or 2,
   and/or a partial (hydrolytic) condensate thereof.
[2] The surface treating agent comprising a fluoropolyether-containing polymer of claim 1 having the following general formula (2): 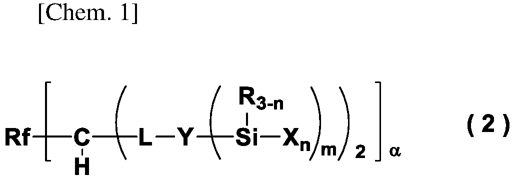 wherein Rf is a monovalent or divalent fluorooxyalkylene-containing polymer residue containing a group having -(C₃F₆O)_{d}- (repeating unit C₃F₆O has a branched structure, and d is an integer of 2 to 200), L is each independently a single bond or a divalent heteroatom, Y is each independently a di- to hexavalent hydrocarbon group, and may have a silicon atom and/or siloxane bond, R is independently a C₁-C₄ alkyl group or a phenyl group, X is independently a hydroxy or hydrolyzable group, n is an integer of 1 to 3, m is an integer of 1 to 5, and α is 1 or 2,
   and/or a partial (hydrolytic) condensate thereof.
[3] A surface treating agent comprising the fluoropolyether-containing polymer of [2] wherein α in formula (2) is 1, and Rf is a group having the following general formula (3), and/or a partial (hydrolytic) condensate thereof, 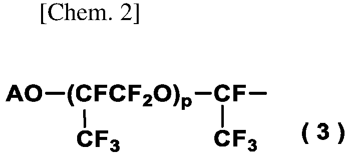 wherein A is fluorine, hydrogen, or a fluoroalkyl group terminated with a -CF₃ group, and p is an integer of 1 to 200.
[4] A surface treating agent comprising the fluoropolyether-containing polymer of [2] or [3] wherein in formula (2), two L's are present at one end of the molecular chain when α = 1, and two L's are present at each of both ends of the molecular chain when α = 2; one L is an oxygen atom, and the other L is a single bond, and Y is each independently a group selected from the group consisting of a C₃-C₁₀ alkylene group, an alkylene group containing C₆-C₈ arylene group, a divalent group having alkylene groups bonded via a silalkylene structure or silarylene structure, and a di- to tetravalent group having a C₂-C₁₀ alkylene group bonded to a bond of a di- to tetravalent linear organopolysiloxane residue of 2 to 10 silicon atoms or a di- to tetravalent branched or cyclic organopolysiloxane residue of 3 to 10 silicon atoms, and/or a partial (hydrolytic) condensate thereof.
[5] A surface treating agent comprising the fluoropolyether-containing polymer of any of [2] to [4] wherein in formula (2), X is each independently selected from the group consisting of a hydroxy group, C₁-C₁₀ alkoxy group, C₂-C₁₀ alkoxyalkoxy group, C₁-C₁₀ acyloxy group, C₂-C₁₀ alkenyloxy group, and halogen, and/or a partial (hydrolytic) condensate thereof.
[6] A surface treating agent comprising the fluoropolyether-containing polymer of any one of [2] to [5] wherein the polymer having formula (2) is selected from those polymers having the following formulae, and/or a partial (hydrolytic) condensate thereof, 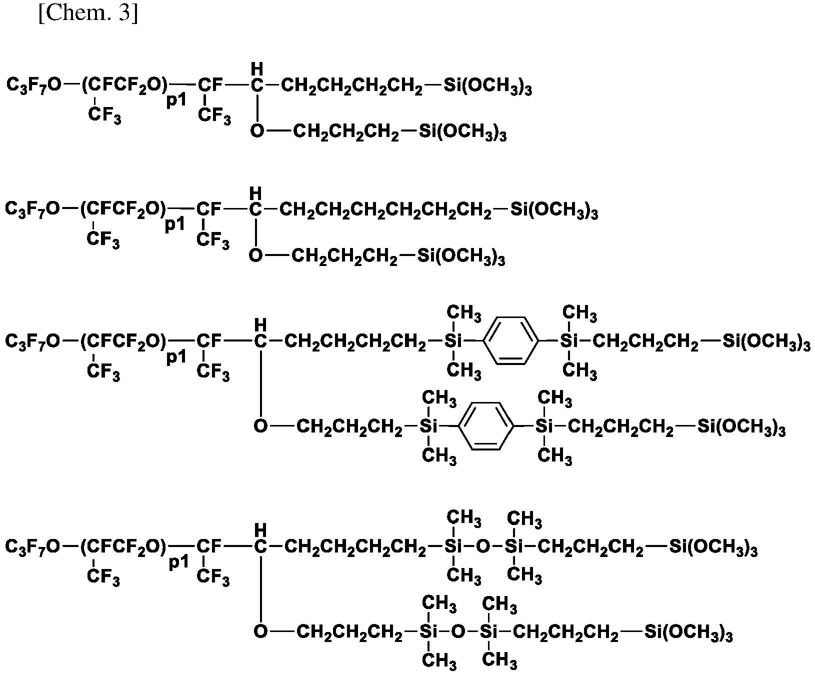 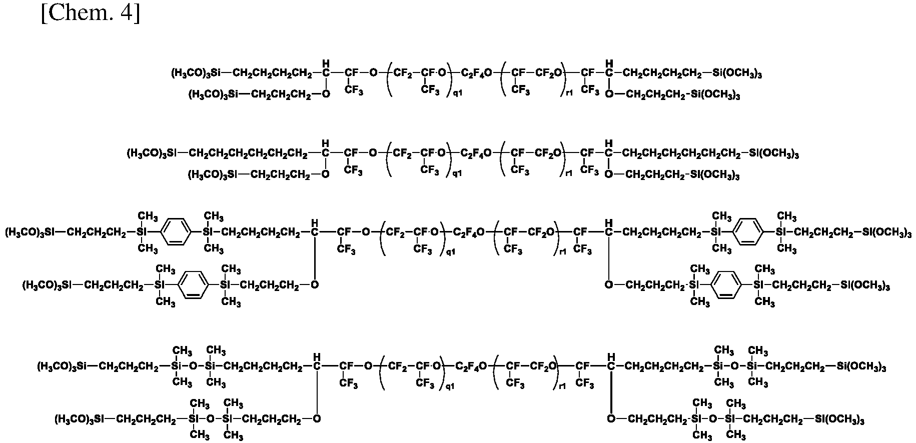 wherein p1, q1 and r1 each are an integer of 1 to 199, and q1 + r1 is an integer of 2 to 200.
[7] An article having a surface treated with the surface treating agent of any one of [1] to [6].

### ADVANTAGEOUS EFFECTS OF INVENTION

According to the surface treating agent comprising a fluoropolyether-containing polymer and/or a partial (hydrolytic) condensate thereof, it is possible to provide a cured film exhibiting high abrasion durability despite having improved water/oil repellency and a high dynamic friction coefficient, and an article having a surface treated with the surface treating agent is less slippery but has improved abrasion durability.

### DESCRIPTION OF EMBODIMENTS

The surface treating agent comprises a fluoropolyether-containing polymer and/or a partial (hydrolytic) condensate thereof, shown below.

The fluoropolyether-containing polymer used in the invention has a fluoropolyether group and a reactive functional group in the molecule, represented by the following general formula (1). The fluoropolyether-containing polymer used in the invention may be used alone or in admixture of two or more.

Rf-[CH(V)₂]_{α} (1)

wherein Rf is a monovalent or divalent fluorooxyalkylene-containing polymer residue containing a group having -(C₃F₆O)_{d}- (repeating unit C₃F₆O has a branched structure, and d is an integer of 2 to 200), V is independently a monovalent group having a hydroxy-containing silyl group or hydrolyzable silyl group at an end and free of polar group other than the hydroxy-containing silyl group and the hydrolyzable silyl group, and α is 1 or 2,

As used herein, the term "about (a value)" is a numerical value (approximate value) rounded off, and when the lowest digit of the numerical value described is not "0", includes up to a numerical range that results in the numerical value described by rounding off the lower digits. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes up to a numerical value range that results in the numerical value described by rounding off the lowest digits. For example, "about 50°C" implies a range from 45°C to 54°C.

The fluoropolyether-containing polymer used in the invention is of the structure that a monovalent fluorooxyalkyl group or divalent fluorooxyalkylene group (i.e., monovalent or divalent fluorooxyalkylene-containing polymer residue) and a hydrolyzable silyl group such as alkoxysilyl group or a hydroxy-containing silyl group are bonded via a linking group free of polar group, and has at least two hydrolyzable silyl groups such as alkoxysilyl group or hydroxy-containing silyl groups in the molecule, and the fluoropolyether-containing polymer is free of a polar group in the molecule other than the hydrolyzable silyl group or the hydroxy-containing silyl group, specifically, an amide group, a hydroxy group and the like, and has more simple binding mode. Thereby, the fluoropolyether-containing polymer has improved substrate adhesion, and has improved water/oil repellency and steel wool abrasion resistance. In addition, a main chain structure is composed of a group represented by -(C₃F₆O)_{d}- (repeating unit C₃F₆O has a branched structure, and d is an integer of 2 to 200), whereby the fluoropolyether-containing polymer has a dynamic friction coefficient (is less slippery).

In the above formula (1), Rf is a monovalent or divalent fluorooxyalkylene-containing polymer residue containing a group represented by -(C₃F₆O)_{d}- (repeating unit C₃F₆O has a branched structure (i.e., a repeating unit structure in which hexafluoropropylene oxide is ring-opened) represented by -CF(CF₃)CF₂O-, and d is an integer of 2 to 200, preferably an integer of 8 to 60.) (repeating structure of hexafluoropropylene oxide) as a main structure, and when α is 1 (i.e., when Rf is a monovalent fluorooxyalkylene-containing polymer residue), Rf is preferably a monovalent fluoropolyether group represented by the following general formula (3), and when α is 2 (i.e., when Rf is a divalent fluorooxyalkylene-containing polymer residue), Rf is preferably a divalent fluoropolyether group represented by the following general formula (4). 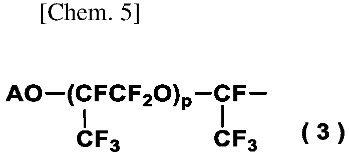 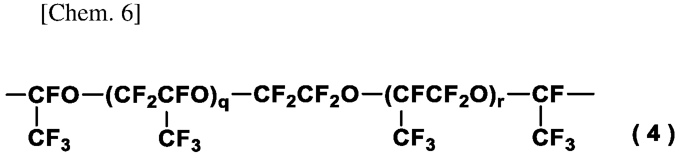 In each of the above formulae, A is fluorine atom, hydrogen atom, or a fluoroalkyl group terminated with a -CF₃ group, p is an integer of 1 to 200, q and r are each an integer of 1 to 199, and q + r is 2 to 200.

In the above formula (3), examples of the fluoroalkyl group in which A is fluorine atom, hydrogen atom, or a fluoroalkyl group terminated with a -CF₃ group, and examples of the fluoroalkyl group terminated with a -CF₃ group include CF₃CF₂CF₂CF₂-, CF₃CF₂CF₂-, CF₃CF₂-, CF₃-, CF₃OCF₂CFH-, CF₃CF₂CF₂OCF₂CFH-, CF₃OCF₂CF₂CF₂OCF₂CFH-, and the like, and CF₃CF₂CF₂- is preferable.

p is an integer of 1 to 200, preferably an integer of 3 to 100, more preferably an integer of 5 to 50. If p is not more than the upper limit, adhesion and curability are satisfactory, and handling is easy, and when the same is not less than the lower limit, the characteristics of fluoropolyether group can be fully developed, which is preferable.

In addition, q and r are each an integer of 1 to 199, q is preferably an integer of 3 to 100, more preferably an integer of 5 to 80, r is preferably an integer of 3 to 100, more preferably an integer of 5 to 80, and q + r = 2 to 200, preferably 6 to 200, more preferably 10 to 160. If q + r is not more than the upper limit, adhesion and curability are satisfactory, and handling is easy, and when the same is not less than the lower limit, the characteristics of fluoropolyether group can be fully developed, which is preferable.

Examples of Rf are shown below. 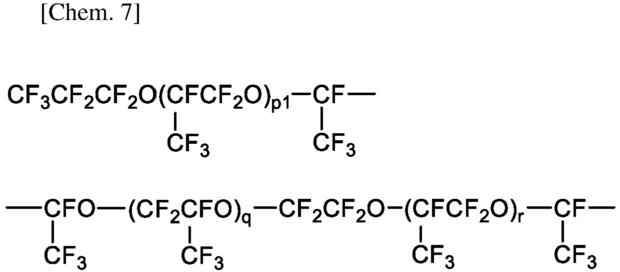 wherein p1 is an integer of 1 to 199, preferably an integer of 3 to 100, and q, r, q + r are the same as described above.

In the above formula (1), V is independently a monovalent group having a hydroxy-containing silyl group or hydrolyzable silyl group at an end and free of polar group, preferably a monovalent group including a hydroxy-containing silyl group or hydrolyzable silyl group at an end and a linking group free of polar group linking the silyl group and a CH group, more preferably a monovalent organic group in which a plurality of hydroxy groups or hydrolyzable groups bonded to a silicon atom is introduced into the terminal, and examples of such V include groups represented by the following formulae (5a) to (5e). 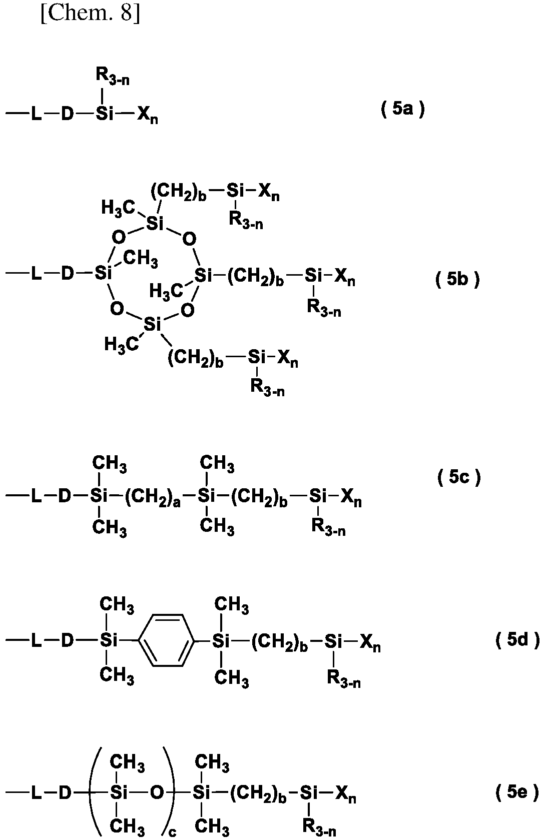 wherein L is a single bond or a divalent heteroatom, D is a C₁-C₂₀ divalent organic group which may be fluorinated, R is each independently a C₁-C₄ alkyl group or a phenyl group, X is each independently a hydroxy group or hydrolyzable group, n is an integer of 1 to 3, a is an integer of 2 to 6, b is independently an integer of 1 to 10, and c is an integer of 1 to 50.

In the above formulae (5a) to (5e), L is a single bond or a divalent heteroatom, and examples of the divalent heteroatom include an oxygen atom, a nitrogen atom, and a sulfur atom. Preferably, one L of the two Vs bonded to the carbon atom in formula (1) is a single bond, and the other L is a divalent heteroatom.

In the above formulae (5a) to (5e), D is a C₁-C₂₀, preferably C₂-C₈ divalent organic group which may be fluorinated, preferably a C₁-C₂₀, more preferably C₂-C₈ divalent hydrocarbon group which may be fluorinated. Examples of the divalent hydrocarbon group include alkylene groups such as methylene, ethylene, propylene (trimethylene, methylethylene), butylene (tetramethylene, methylpropylene), hexamethylene, and octamethylene, arylene groups such as phenylene, or combinations of at least two of the foregoing (e.g., alkylene arylene groups), and substituted forms of the foregoing in which some or all of the hydrogen atoms are substituted by fluorine atoms. D is preferably ethylene, propylene, butylene, hexamethylene or phenylene.

In the above formulae (5a) to (5e), R is a C₁-C₄ alkyl group such as methyl, ethyl, propyl or butyl, or phenyl. Inter alia, methyl is preferred.

X is a hydroxy or hydrolyzable group which may be different from each other. Examples of such X include a hydroxy group, C₁-C₁₀ alkoxy groups such as methoxy, ethoxy, propoxy, isopropoxy, and butoxy, C₂-C₁₀ alkoxylalkoxy groups such as methoxymethoxy and methoxyethoxy, C₁-C₁₀ acyloxy groups such as acetoxy, C₂-C₁₀ alkenyloxy groups such as isopropenoxy, and halogen groups such as chloro, bromo or iodo. Inter alia, methoxy, ethoxy, isopropenoxy and chloro are preferred.

In the above formulae (5a) to (5e), n is an integer of 1 to 3, preferably 2 or 3, and n is most preferably 3 from the standpoints of reactivity and substrate adhesion. The subscript "a" is an integer of 2 to 6, preferably 2 to 4, b is independently an integer of 1 to 10, preferably 3 to 6, and c is an integer of 1 to 50, preferably 1 to 9.

Specific examples of such V include those shown below.

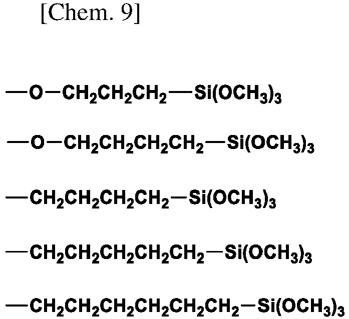

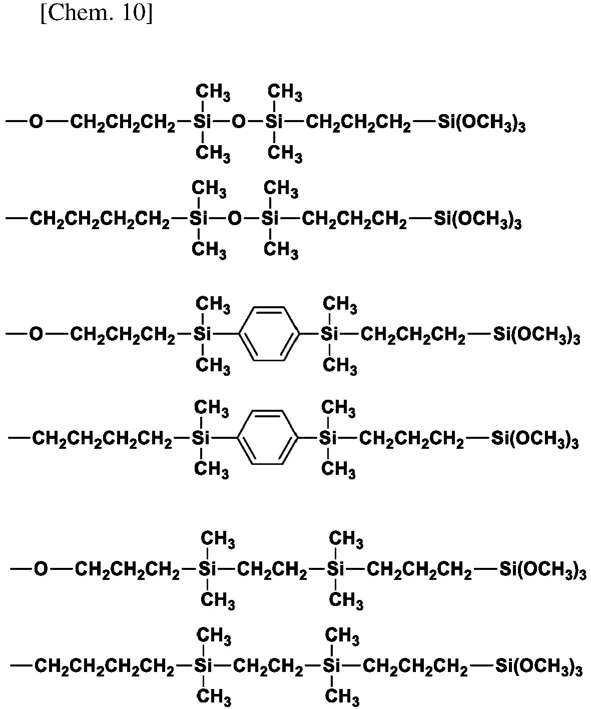

In the above formula (1), α is 1 or 2, preferably 1.

The fluoropolyether-containing polymer used in the invention is most preferably a polymer represented by the following general formula (2): 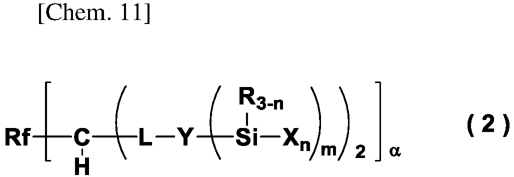 wherein Rf, L, R, X, n and α are the same as described above, Y is each independently a di- to hexavalent hydrocarbon group, and may have a silicon atom and/or siloxane bond, and m is an integer of 1 to 5.

In the above formula (2), L is each independently a single bond or a divalent heteroatom similarly to L described above, and examples of the divalent heteroatom include an oxygen atom, a nitrogen atom, and a sulfur atom, but preferably, two L's are present at each end (i.e., one end of the molecular chain when α = 1, and each of both ends of the molecular chain when α = 2) of the molecular chain, one L is an oxygen atom, and the other L is a single bond.

In the above formula (2), Y is each independently a di- to hexavalent, preferably di- to tetravalent, more preferably divalent hydrocarbon group, and may have a silicon atom and/or siloxane bond, and by being free of polar group in the molecule, a coating film having improved water/oil repellency can be provided.

Specifically, Y is a C₃-C₁₀ alkylene group such as propylene group, butylene group or hexamethylene group, an alkylene group containing C₆-C₈ arylene group like phenylene (e.g., C₈-C₁₆ alkylene arylene groups, etc.), a divalent group having alkylene groups bonded via a silalkylene structure or silarylene structure, or a di- to hexavalent group having a C₂-C₁₀ alkylene group bonded to a bond of a di- to hexavalent linear organopolysiloxane residues of 2 to 10 silicon atoms, preferably 2 to 5, or a di- to hexavalent branched or cyclic organopolysiloxane residue of 3 to 10 silicon atoms, preferably 3 to 5 silicon atoms; preferably a C₃-C₁₀ alkylene group, an alkylene group containing phenylene, a divalent group having alkylene groups bonded via a silalkylene or silarylene structure, a di- to tetravalent group having a C₂-C₁₀ alkylene group bonded to a bond of a di- to tetravalent linear organopolysiloxane residue of 2 to 10 silicon atoms, or a di- to tetravalent group having a C₂-C₁₀ alkylene group bonded to a bond of a di- to tetravalent branched or cyclic organopolysiloxane residue of 3 to 10 silicon atoms; most preferably a C₃-C₆ alkylene group.

The silalkylene or silarylene structure is exemplified by the following structure. 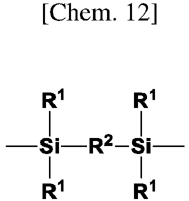 wherein R¹ is a C₁-C₄ alkyl group such as methyl, ethyl, propyl or butyl, or a C₆-C₁₀ aryl group such as phenyl, and R¹ may be the same or different; R² is a C₁-C₄ alkylene group such as methylene, ethylene or propylene (trimethylene, methylethylene), or a C₆-C₁₀ arylene group such as phenylene.

Examples of a di- to hexavalent linear organopolysiloxane residues of 2 to 10 silicon atoms, preferably 2 to 5 silicon atoms or a di- to hexavalent branched or cyclic organopolysiloxane residue of 3 to 10 silicon atoms, preferably 3 to 5 silicon atoms are shown below. 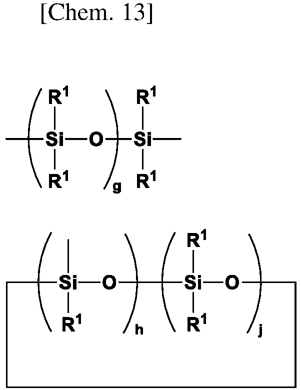 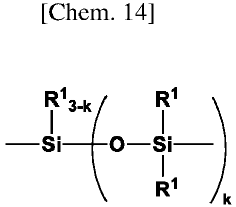 wherein R¹ is the same as described above; g is an integer of 1 to 9, preferably 1 to 4, h is an integer of 2 to 6, preferably 2 to 4, j is an integer of 0 to 8, preferably 0 or 1, h + j is an integer of 3 to 10, preferably 3 to 5, and k is an integer of 1 to 3, preferably 2 or 3.

Exemplary of Y are groups as shown below. 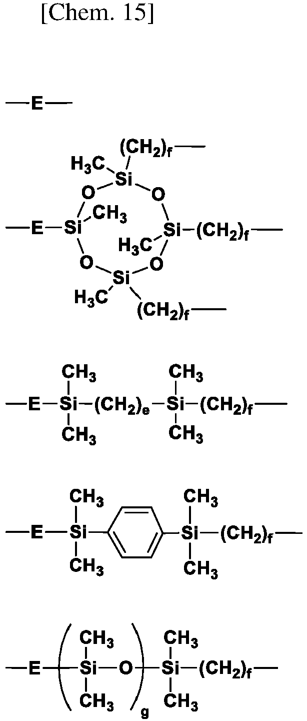 wherein E is a C₃-C₁₀ alkylene group or a C₈-C₁₆ alkylene arylene group, e is an integer of 1 to 4, f is an integer of 2 to 10, preferably 2 to 8, and g is the same as described above.

Illustrative examples of Y include the following groups.

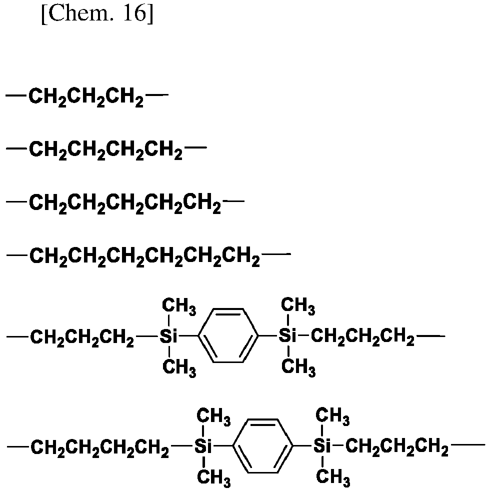

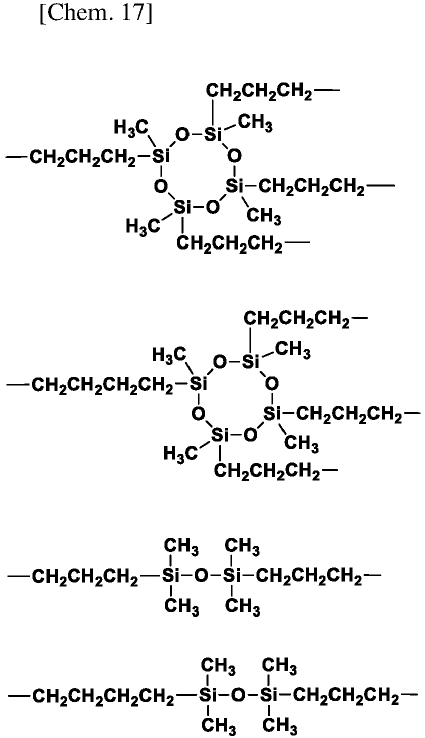

In the above formula (2), m is an integer of 1 to 5. If m is less than 1, substrate adhesion is low. If m is 6 or more, a terminal alkoxy value becomes too high and adversely affects performance. Preferably m is an integer of 1 to 3, most preferably 1.

Examples of the fluoropolyether-containing polymer represented by formula (2) include those polymers of the following formulae. 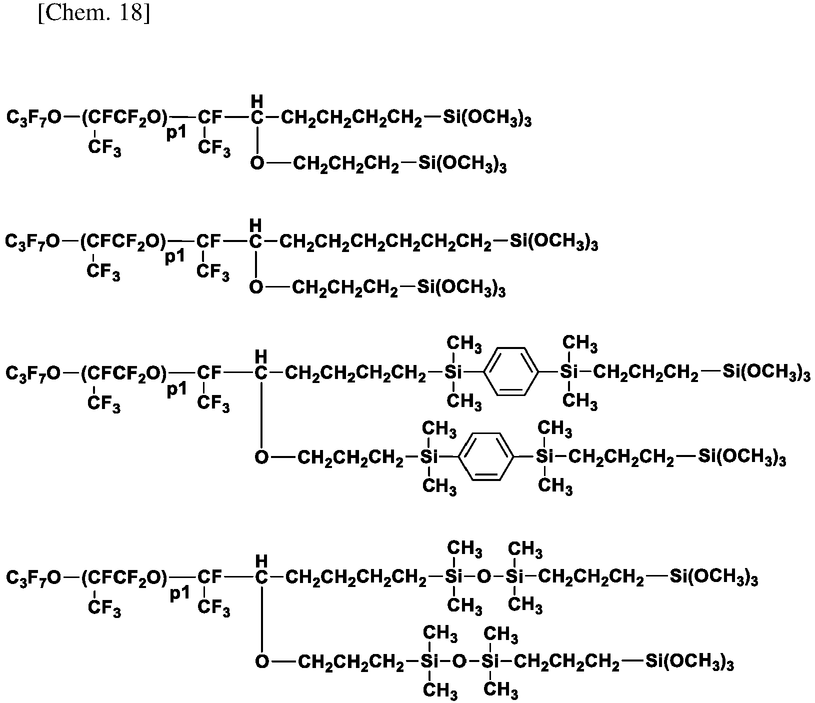 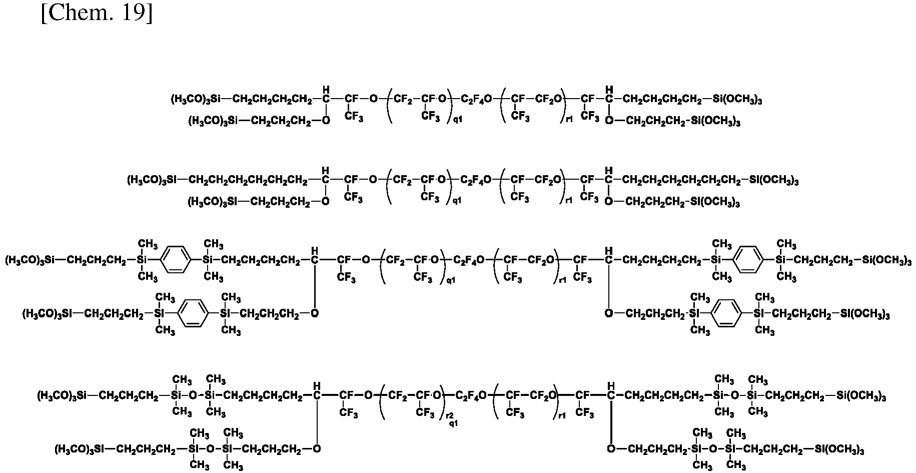 wherein p1 is the same as described above, q1 and r1 are an integer of 1 to 199, preferably an integer of 1 to 100, and q1 + r1 is an integer of 2 to 200.

The fluoropolyether-containing polymer represented by formula (2) wherein α = 1 (i.e., Rf is a monovalent fluorooxyalkylene-containing polymer residue) or α = 2 (i.e., Rf is a divalent fluorooxyalkylene-containing polymer residue) may be prepared, for example, by the following method.

First, a fluoropolyether-containing polymer having a carbonyl group at an end, represented by the following general formula (6) 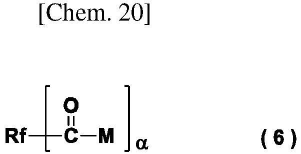 wherein Rf and α are the same as described above, and M is a detachable monovalent group,
is reacted with an organic metal reagent having an aliphatic unsaturated double bond (olefin site) at an end and β-hydrogen (i.e., hydrogen atom bonded to the carbon atom at β position relative to metal atom), preferably in the presence of a solvent.

In formula (6), M is an eliminatable monovalent group, for example, hydrogen, halogen, hydroxy, alkoxy, amino, alkylamino, thiol, alkylthio or acyl group.

Exemplary of M are the groups shown below.

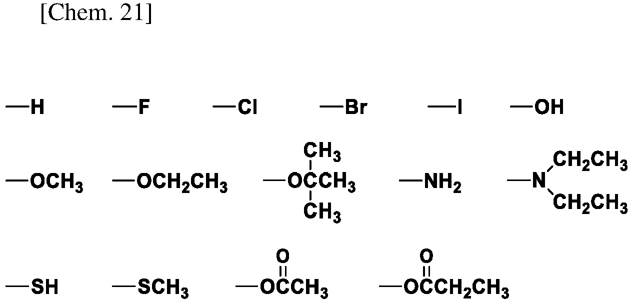

Examples of the fluoropolyether-containing polymer having a carbonyl group at an end, represented by formula (6) are shown below. 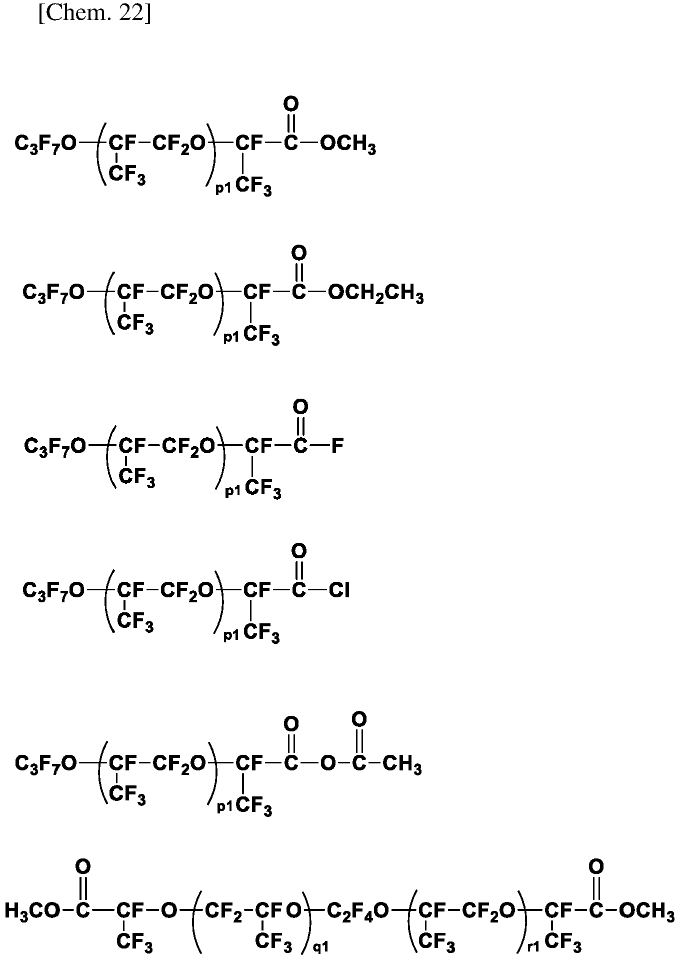 wherein p1, q1, r1, and q1 + r1 are the same as described above.

Illustrative of the organic metal reagent having an aliphatic unsaturated double bond at an end and β-hydrogen are organolithium reagents, Grignard reagents, organozinc reagents, organoboron reagents, and organotin reagents. Inter alia, Grignard reagents and organozinc reagents are preferred for ease of handling. The following compounds are preferably used as the organic metal reagent.

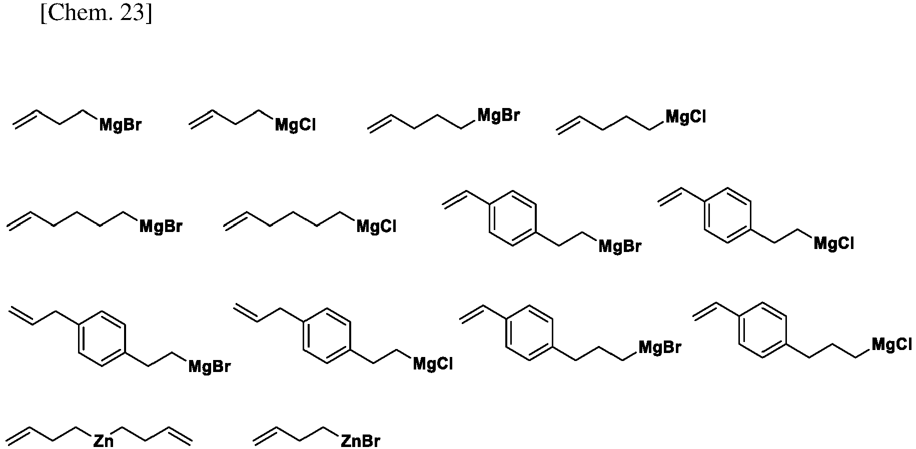

The amount of the organic metal reagent having an aliphatic unsaturated double bond at an end and β-hydrogen is preferably 2 to 5 equivalents, more preferably 2.5 to 3.5 equivalents, most preferably about 3 equivalents per equivalent of reactive end group (eliminatable monovalent group) in the fluoropolyether-containing polymer having a carbonyl group at an end, represented by formula (6).

A solvent may be used in the reaction of the fluoropolyether-containing polymer having a carbonyl group at an end, represented by formula (6) with the organic metal reagent having an aliphatic unsaturated double bond at an end and β-hydrogen. Although the solvent used herein is not particularly limited, a fluorochemical solvent is preferably used because the reactant is a fluorine compound. Suitable fluorochemical solvents include 1,3-bistrifluoromethylbenzene, trifluoromethylbenzene, perfluoro solvents (Asahiklin AC 2000, Asahiklin AC-6000) marketed from AGC Inc., hydrofluoroether (HFE) solvents (NOVEC 7100: C₄F₉OCH₃, NOVEC 7200: C₄F₉OC₂H₅, NOVEC 7300: C₂F₅-CF(OCH₃)-CF(CF₃)₂) marketed from 3M, and perfluoro solvents (PF5080, PF5070, PF5060) marketed from 3M. The fluorochemical solvents may be used alone or in admixture.

Besides the fluorochemical solvent, an organic solvent may also be used as the solvent. Ether solvents such as tetrahydrofuran (THF), monoethylene glycol dimethyl ether, diethylene glycol dimethyl ether, triethylene glycol dimethyl ether, tetraethylene glycol dimethyl ether, and dioxane may be used as the organic solvent. The organic solvent may be used alone or in admixture with the fluorochemical solvent.

The amount of the solvent used is 10 to 600 parts by weight, preferably 50 to 400 parts by weight, more preferably about 200 to 350 parts by weight per 100 parts by weight of the fluoropolyether-containing polymer having a carbonyl group at an end, represented by formula (6).

Conditions for the reaction of the fluoropolyether-containing polymer having a carbonyl group at an end, represented by formula (6) with the organic metal reagent having an aliphatic unsaturated double bond at an end and β-hydrogen include 0 to 80°C, preferably 45 to 70°C, more preferably about 50°C and 1 to 12 hours, preferably 5 to 7 hours.

After the reaction is performed under the above conditions, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a hydroxy group and an olefin site at an end of the molecular chain, represented by the following formula (7). 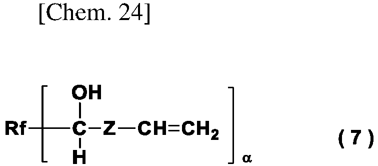 wherein Rf and α are as defined above, and Z is independently a divalent hydrocarbon group which may contain a silicon atom and/or siloxane bond.

In formula (7), Z is independently a divalent hydrocarbon group, preferably a C₁-C₂₀, more preferably C₂-C₁₂ divalent hydrocarbon group. Examples thereof include C₁-C₈ alkylene groups such as methylene, ethylene, propylene (trimethylene, methylethylene), butylene (tetramethylene, methylpropylene), hexamethylene, and octamethylene, and alkylene groups containing a C₆-C₈ arylene group such as phenylene (e.g., C₇-C₁₀ alkylene arylene groups). Z is preferably a C₁-C₄ straight alkylene group.

Examples of Z include the groups shown below.

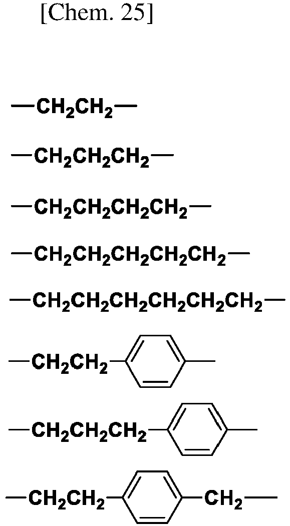

Examples of the fluoropolyether-containing polymer having a hydroxy group and an olefin site at an end of the molecular chain, represented by formula (7), are shown below. 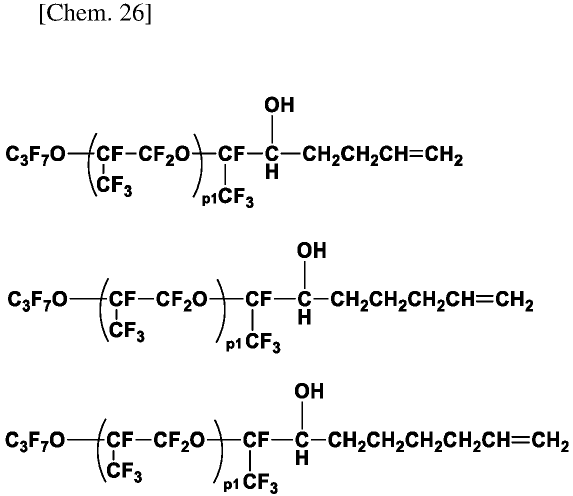 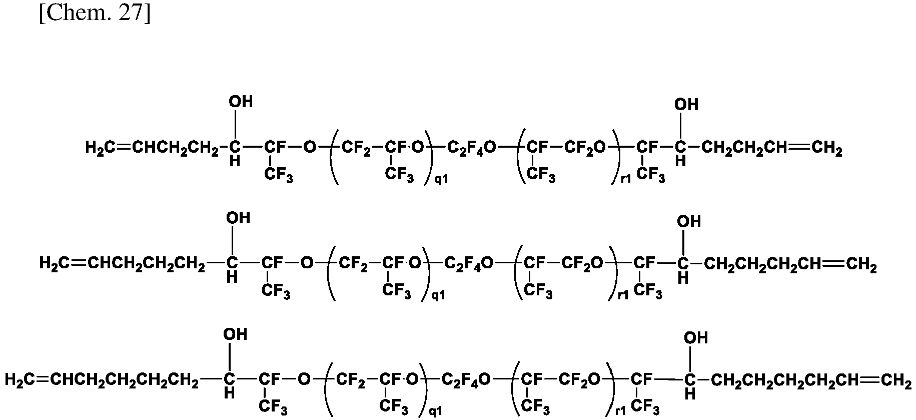 wherein p1, q1, r1, and q1 + r1 are the same as described above.

Next, the fluoropolyether-containing polymer having a hydroxy group and an olefin site at an end of the molecular chain, represented by formula (7) obtained above, and an olefin-introducing agent are aged in the presence of a base at a temperature of 0 to 90°C, preferably 40 to 60°C, more preferably about 50°C for 1 to 48 hours, preferably 10 to 40 hours, more preferably about 24 hours, optionally along with an additive for enhancing reactivity and a solvent.

Here, as the olefin-introducing agent to be reacted with the fluoropolyether-containing polymer having a hydroxy group and an olefin site at an end of the molecular chain, represented by formula (7), for example, a halide or the like can be used, and specific examples thereof include allyl bromide, allyl chloride, and 3-butenyl bromide.

The amount of the olefin-introducing agent used is 1 to 15 equivalents, more preferably 3 to 6 equivalents, most preferably about 4 equivalents per equivalent of the reactive end group (hydroxy group) in the fluoropolyether-containing polymer having a hydroxy group and an olefin site at an end of the molecular chain, represented by formula (7).

Examples of the base used in the reaction of the fluoropolyether-containing polymer having a hydroxy group and an olefin site at an end of the molecular chain, represented by formula (7) with the olefin-introducing agent include amines and alkali metal bases. Exemplary amines include triethylamine, diisopropylethylamine, pyridine, DBU, and imidazole. Exemplary alkali metal bases include sodium hydroxide, potassium hydroxide, sodium hydride, potassium hydride, alkyllithium, t-butoxypotassium, lithium diisopropylamide, lithium bis(trimethylsilyl)amide, sodium bis(trimethylsilyl)amide, and potassium bis(trimethylsilyl)amide.

The amount of the base used is 1 to 20 equivalents, more preferably 4 to 8 equivalents, most preferably about 6 equivalents per equivalent of the reactive end group (hydroxy group) in the fluoropolyether-containing polymer having a hydroxy group and an olefin site at an end of the molecular chain, represented by formula (7).

For the reaction of the fluoropolyether-containing polymer having a hydroxy group and an olefin site at an end of the molecular chain, represented by formula (7) with the olefin-introducing agent, an additive for enhancing reactivity such as tetrabutylammonium halide or alkali metal halide may be used. Exemplary additives include tetrabutylammonium chloride, tetrabutylammonium bromide, tetrabutylammonium iodide, tetrabutylammonium hydrogen sulfate, sodium iodide, potassium iodide, cesium iodide, and crown ethers. In the reaction system, catalytic halogen exchange takes place between the additive and the olefin-introducing agent to enhance reactivity whereas a crown ether coordinates with the metal to enhance reactivity.

The amount of the additive used is 0.005 to 0.1 equivalent, more preferably 0.01 to 0.05 equivalent, most preferably about 0.02 equivalent per equivalent of the reactive end group (hydroxy group) in the fluoropolyether-containing polymer having a hydroxy group and an olefin site at an end of the molecular chain, represented by formula (7).

In the reaction of the fluoropolyether-containing polymer having a hydroxy group and an olefin site at an end of the molecular chain represented by formula (7) with the olefin-introducing agent, a solvent may be used. Although the solvent is not essential, a fluorochemical solvent is typically used as the solvent. Suitable fluorochemical solvents include fluorinated aromatic hydrocarbon solvents such as 1,3-bis(trifluoromethyl)benzene and trifluoromethylbenzene, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M). Organic solvents may also be used, for example, dimethylforamide, dimethylacetamide, dimethyl sulfoxide, acetonitrile, and THF.

The amount of the solvent used is 10 to 300 parts by weight, preferably 30 to 150 parts by weight, more preferably about 50 parts by weight per 100 parts by weight of the fluoropolyether-containing polymer having a hydroxy group and an olefin site at an end of the molecular chain, represented by formula (7).

By the reaction of the fluoropolyether group-containing polymer having a hydroxy group and an olefin site at an end of the molecular chain represented by formula (7) with the olefin-introducing agent, a fluoropolyether-containing polymer having two olefin sites at an end of the molecular chain, represented by the following formula (8) is obtained, 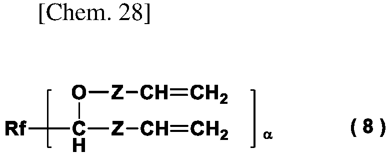 wherein Rf, Z and α are the same as described above.

Preferable examples of the fluoropolyether-containing polymer having two olefin sites at an end of the molecular chain, represented by formula (8) are shown below. 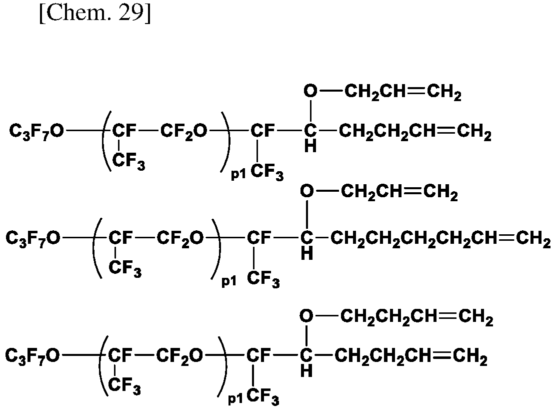 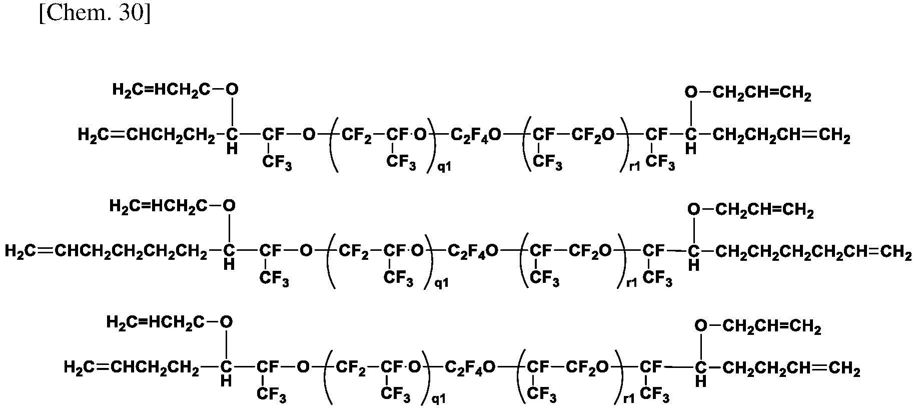 wherein p1, q1, r1, and q1 + r1 are the same as described above.

Next, the fluoropolyether-containing polymer having two olefin sites at an end of the molecular chain, represented by formula (8) is dissolved in a solvent such as fluorochemical solvent, typically 1,3-bis(trifluoromethyl)benzene. An organosilicon compound having a SiH group and a hydrolyzable end group in the molecule such as trimethoxysilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. There is obtained a fluoropolyether-containing polymer represented by formula (2).

An alternative method for preparing the fluoropolyether-containing polymer represented by formula (2) is, for example, the method shown below.

The fluoropolyether-containing polymer having two olefin sites at an end of the molecular chain, represented by formula (8) is dissolved in a solvent such as fluorochemical solvent, typically 1,3-bis(trifluoromethyl)benzene. An organosilicon compound having a SiH group and a hydrolyzable end group (halogen atom) in the molecule such as trichlorosilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. It is noted that after aging, the substituent (halogen) on the silyl group may be converted to, for example, a methoxy group.

It is noted that an organosilicon compound having a SiH group and free of a hydrolyzable end group in the molecule may be used instead of the organosilicon compound having a SiH group and a hydrolyzable end group in the molecule. In this embodiment, an organosilicon compound having at least two SiH groups and free of a hydrolyzable end group in the molecule is used. After the fluoropolyether-containing polymer having two olefin sites at an end of the molecular chain, represented by formula (8) is reacted with the organosilicon compound having at least two SiH groups and free of a hydrolyzable end group in the molecule as in the above embodiment, the reaction product having SiH groups at a polymer end is mixed with an organosilicon compound having an olefin site and a hydrolyzable end group in the molecule, such as allyltrimethoxysilane. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours.

As the organosilicon compound having a SiH group and a hydrolyzable end group in the molecule used in the preparation of the fluoropolyether-containing polymer represented by formula (2), compounds having the following general formulae (9a) to (9d) are preferred, 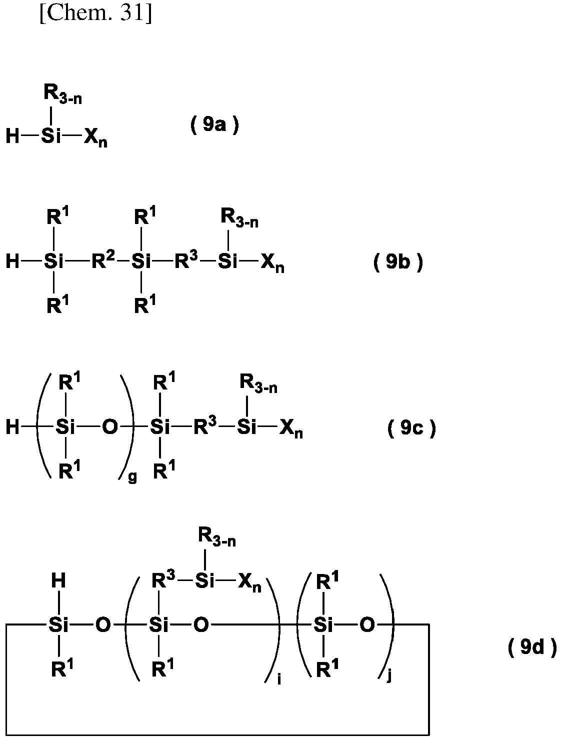 wherein R, X, n, R¹, R², g and j are the same as described above, i is an integer of 1 to 5, preferably 1 to 3, i + j is an integer of 2 to 9, preferably 2 to 4, and R³ is a C₂-C₈ divalent hydrocarbon group.

R³ is a C₂-C₈, preferably C₂-C₄ divalent hydrocarbon group, examples of which include alkylene groups such as ethylene, propylene (trimethylene, methylethylene), butylene (tetramethylene, methylpropylene), hexamethylene, and octamethylene, arylene groups such as phenylene, or combinations of at least two of the foregoing (e.g., alkylene-arylene groups). Inter alia, ethylene and trimethylene are preferred.

Examples of the organosilicon compound having a SiH group and a hydrolyzable end group in the molecule include trimethoxysilane, triethoxysilane, tripropoxysilane, triisopropoxysilane, tributoxysilane, triisopropenoxysilane, triacetoxy silane, trichlorosilane, tribromosilane, and triiodosilane as well as the silane compounds shown below.

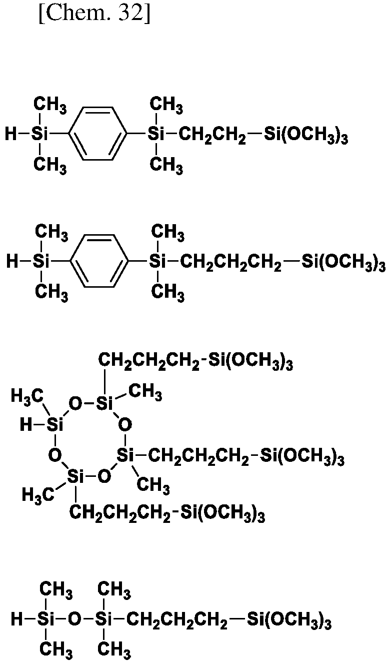

In the embodiment wherein the preparation of the fluoropolyether-containing polymer having formula (2) involves the addition reaction of the fluoropolyether-containing polymer having two olefin sites at an end of the molecular chain to the organosilicon compound having a SiH group and a hydrolyzable end group in the molecule, the organosilicon compound having a SiH group and a hydrolyzable end group in the molecule is preferably used in such an amount as to provide 1.5 to 4 equivalents, more preferably 2 to 2.5 equivalents of SiH group in the organosilicon compound per equivalent of reactive end group (terminal olefin site) in the fluoropolyether-containing polymer having two olefin sites at an end of the molecular chain.

As the organosilicon compound having at least two SiH groups and free of a hydrolyzable end group in the molecule used in the preparation of the fluoropolyether-containing polymer having formula (2), compounds having the following general formulae (10a) to (10c) are preferred. 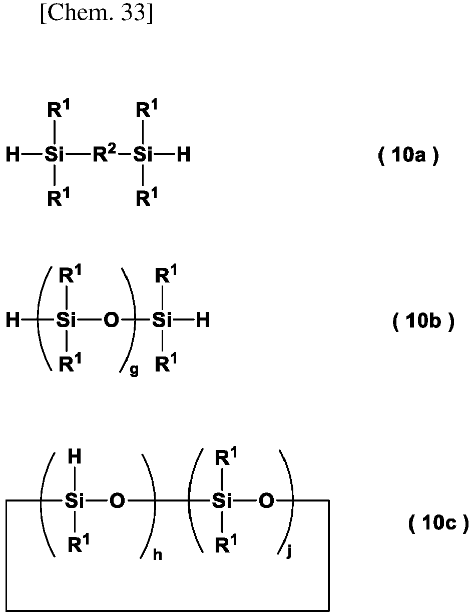 Herein R¹, R², g, h, j and h+j are as defined above.

Examples of the organosilicon compound having at least two SiH groups and free of a hydrolyzable end group in the molecule include those shown below.

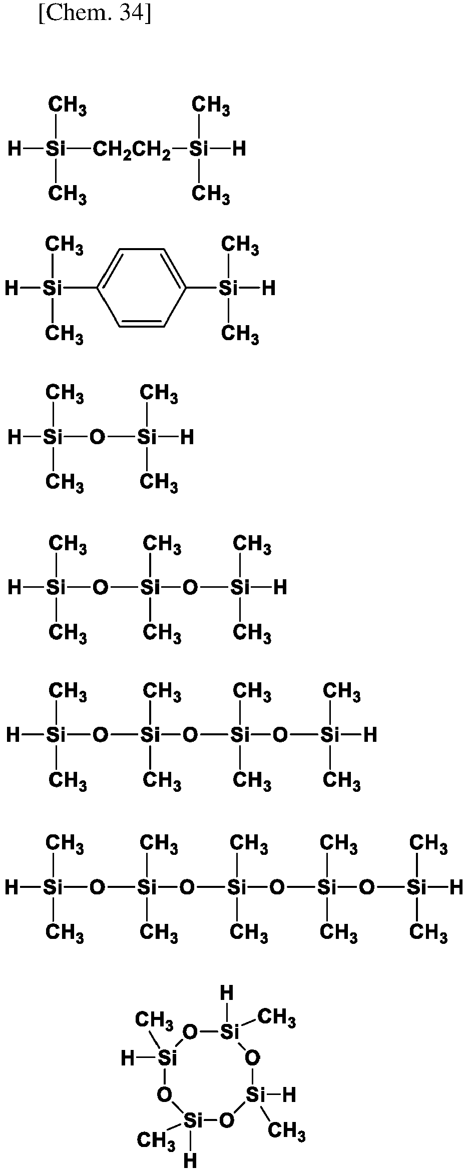

In the embodiment wherein the preparation of the fluoropolyether-containing polymer having formula (2) involves the addition reaction of the fluoropolyether-containing polymer having two olefin sites at an end of the molecular chain to the organosilicon compound having at least two SiH groups and free of a hydrolyzable end group in the molecule, the amount of the organosilicon compound having at least two SiH groups and free of a hydrolyzable end group in the molecule used is 5 to 30 equivalents, more preferably 7 to 20 equivalents of SiH group in the organosilicon compound per equivalent of reactive end group (terminal olefin site) in the fluoropolyether-containing polymer having two olefin sites at an end of the molecular chain.

In the preparation of the fluoropolyether-containing polymer having formula (2), examples of the addition reaction product of the fluoropolyether-containing polymer having two olefin sites at an end of the molecular chain with the organosilicon compound having at least two SiH groups and free of a hydrolyzable end group in the molecule include those of the following formulae. 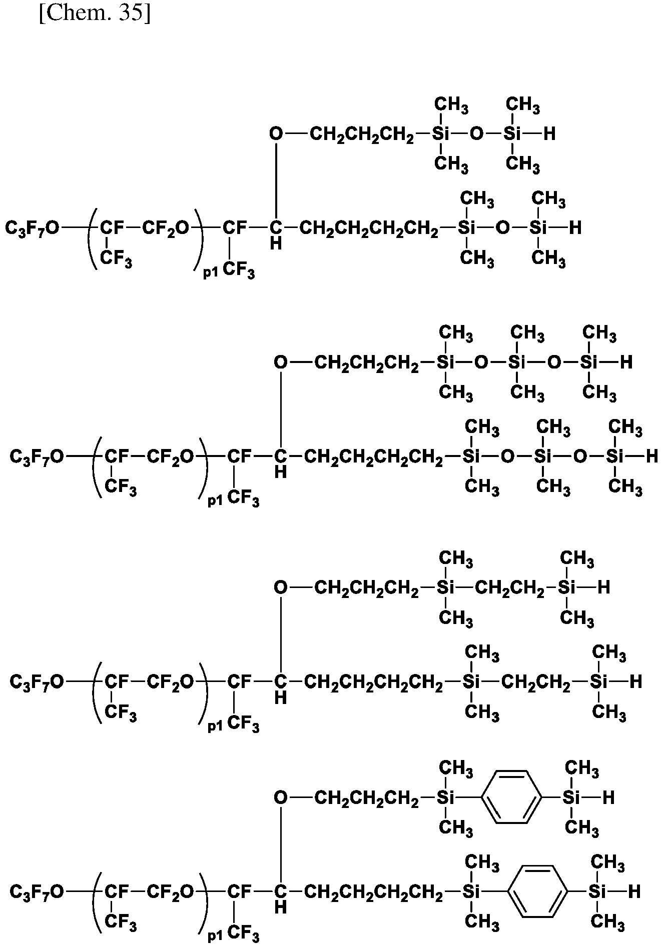 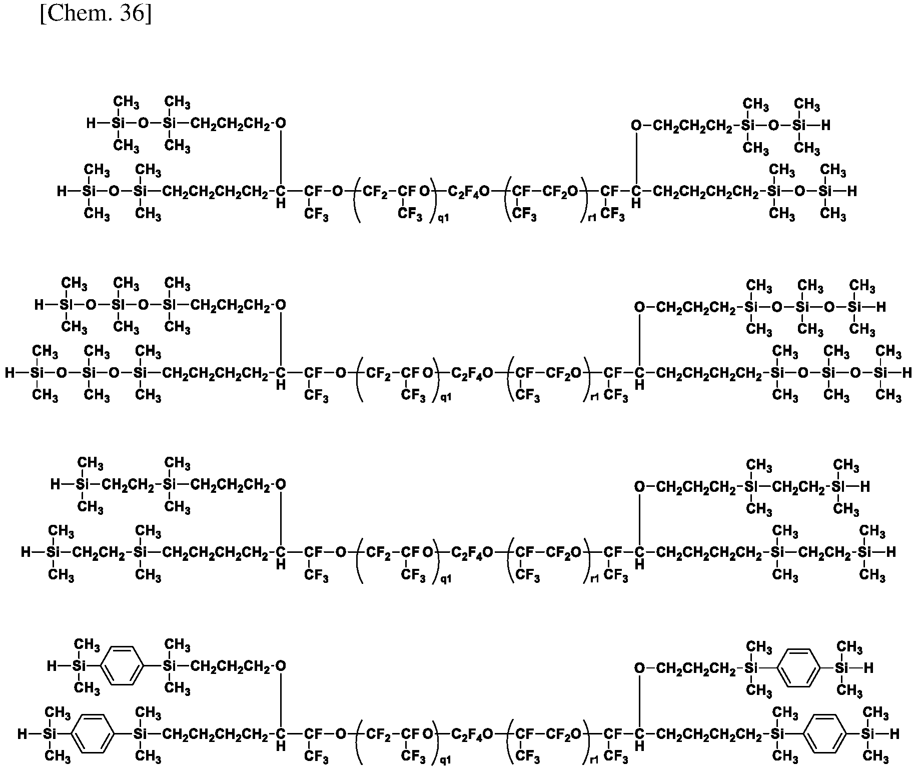 wherein p1, q1, r1, and q1 + r1 are the same as described above.

In the preparation of the fluoropolyether-containing polymer having formula (2), compounds having the following general formula (11) are preferred as the organosilicon compound having an olefin site and a hydrolyzable end group in the molecule to be reacted with SiH groups at a polymer end of the addition reaction product. 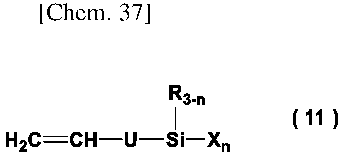 wherein R, X and n are as described above, and U is a single bond or a C₁-C₆ divalent hydrocarbon group.

In formula (11), U is a single bond or a C₁-C₆ divalent hydrocarbon group. Examples of the C₁-C₆ divalent hydrocarbon group include alkylene groups such as methylene, ethylene, propylene (trimethylene, methylethylene), butylene (tetramethylene, methylpropylene), and hexamethylene, and phenylene. U is preferably a single bond or methylene.

Examples of the organosilicon compound having an olefin site and a hydrolyzable end group in the molecule include compounds as shown below.

[Chem. 38] **CH₂=CHCH₂-Si(OCH₃)₃ CH₂=CHCH₂CH₂-Si(OCH₃)₃**

In the embodiment wherein the preparation of the fluoropolyether-containing polymer having formula (2) involves the reaction of the addition reaction product of the fluoropolyether-containing polymer having two olefin sites at an end of the molecular chain with the organosilicon compound having at least two SiH groups and free of a hydrolyzable end group in the molecule, with the organosilicon compound having an olefin site and a hydrolyzable end group in the molecule, the organosilicon compound having an olefin site and a hydrolyzable end group in the molecule is preferably used in such an amount as to provide 1.5 to 4 equivalents, more preferably 2 to 2.5 equivalents of olefin site in the organosilicon compound having an olefin site and a hydrolyzable end group in the molecule per equivalent of reactive end group (terminal SiH group) in the addition reaction product of the fluoropolyether-containing polymer having two olefin sites at an end of the molecular chain with the organosilicon compound having at least two SiH groups and free of a hydrolyzable end group in the molecule.

As the solvent used in the preparation of the fluoropolyether-containing polymer having formula (2), fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 150 parts by weight, most preferably about 100 parts by weight per 100 parts by weight of the fluoropolyether-containing polymer having two olefin sites at an end of the molecular chain.

Examples of the hydrosilylation catalyst used in the preparation of the fluoropolyether-containing polymer having formula (2) include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilylation catalyst is preferably used in an amount to provide 0.01 to 100 ppm, more preferably 0.1 to 50 ppm of transition metal based on the weight of the fluoropolyether-containing polymer having two olefin sites at an end of the molecular chain or the reaction product of this polymer with the organosilicon compound having at least two SiH groups and free of a hydrolyzable end group in the molecule.

Thereafter, the solvent and unreacted reactants are distilled off in vacuum, yielding the target compound.

For example, when a compound represented by the following formula: 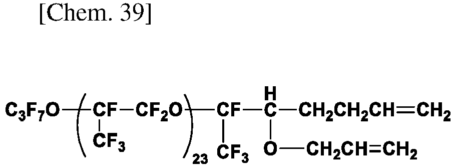 is used as the fluoropolyether-containing polymer having two olefin sites at an end of the molecular chain, and trimethoxysilane is used as the organosilicon compound having a SiH group and a hydrolyzable end group in the molecule, a compound represented by the following formula is obtained.

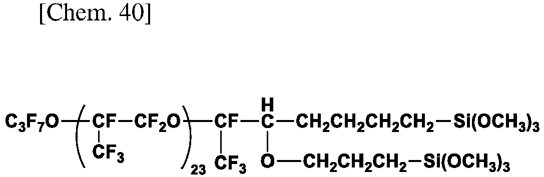

In addition, for example, when a compound represented by the following formula: 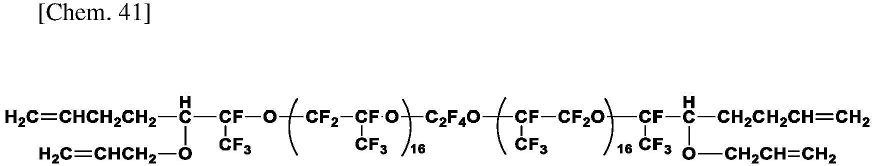 is used as the fluoropolyether-containing polymer having two olefin sites at an end of the molecular chain, and trimethoxysilane is used as the organosilicon compound having a SiH group and a hydrolyzable end group in the molecule, a compound represented by the following formula is obtained.

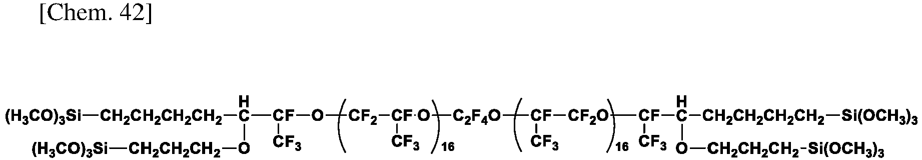

The invention provides a surface treating agent comprising a fluoropolyether-containing polymer having a hydroxy-containing silyl group or hydrolyzable silyl group represented by formula (1), especially a fluoropolyether-containing polymer having a hydroxy-containing silyl group or hydrolyzable silyl group represented by formula (2). The surface treating agent may also comprise a partial (hydrolytic) condensate which is obtained by condensing the hydroxy group on the fluoropolyether-containing polymer, or a hydroxy group resulting from partial hydrolysis of the hydrolyzable end group on the fluoropolyether-containing polymer in a well-known manner.

To the surface treating agent, a hydrolytic condensation catalyst may be added if necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst may be added in a catalytic amount, typically 0.01 to 5 parts, more preferably 0.1 to 1 part by weight per 100 parts by weight of the fluoropolyether-containing polymer and/or its partial (hydrolytic) condensate.

The surface treating agent may further comprise a solvent. Suitable solvents include fluorine-modified aliphatic hydrocarbon solvents such as perfluoroheptane and perfluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, and perfluoro(2-butyltetrahydrofuran); fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, with 1,3-bis(trifluoromethyl)benzene, perfluoro(2-butyltetrahydrofuran), perfluorotributylamine, and ethyl perfluorobutyl ether being more desirable.

The solvents may be used in admixture of two or more while it is preferred that the fluoropolyether-containing polymer and its partial (hydrolytic) condensate be uniformly dissolved in the solvent. An optimum concentration of the fluoropolyether-containing polymer and its partial (hydrolytic) condensate in the solvent varies with a particular treating mode. The amount which is easy to weigh may be chosen. In the case of direct coating, the concentration may preferably be 0.01 to 10 parts by weight, more preferably 0.05 to 5 parts by weight per 100 parts by weight of the solvent and the fluoropolyether-containing polymer (and its partial (hydrolytic) condensate) combined. In the case of evaporation treatment, the concentration may preferably be 1 to 100 parts by weight, more preferably 3 to 30 parts by weight per 100 parts by weight of the solvent and the fluoropolyether-containing polymer (and its partial (hydrolytic) condensate) combined.

The surface treating agent may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 80°C for 30 minutes to 36 hours, especially 1 to 24 hours. In addition, in the case of application by evaporation, the temperature is desirably in the range of 20 to 200°C. Humid curing conditions are also useful. The cured film typically has a thickness of 0.1 to 100 nm, desirably 1 to 20 nm although the thickness depends on the type of substrate. Also, in the case of spray coating, for example, a procedure involving diluting the agent with a fluorochemical solvent having water previously added thereto, for thereby effecting hydrolysis to generate Si-OH, and thereafter, spraying the dilution is recommended because the coating rapidly cures.

The substrate to be treated with the surface treating agent is not particularly limited, and may be made of any desired materials including paper, fabric, metals, metal oxides, glass, plastics, ceramics, and quartz. The surface treating agent is effective for endowing the substrate with water/oil repellency and steel wool abrasion resistance. In particular, the surface treating agent is advantageously used for the treatment of SiO₂-deposited glass and film.

Preferred articles which may be treated with the surface treating agent include car navigation systems, mobile phones, smart phones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. In addition, from the viewpoint of being less slippery, the surface treating agent can also be treated with a housing of a mobile phone, a smart phone, a PC, or the like. The surface treating agent is effective for preventing fingerprints and sebum from adhering to the articles and also for imparting scratch resistance or abrasion resistance. Therefore, it is particularly useful as a water/oil repellent layer on a housing of a mobile phone, a smart phone, a PC, or the like.

The surface treating agent is also useful for anti-staining coatings on sanitary ware such as bathtubs and washbowls; anti-staining coatings on glazing or strengthened glass and head lamp covers in transport vehicles such as automobiles, trains and aircraft; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; resin modifiers; fluidity improvers or dispersibility improvers of inorganic fillers; and water/oil repellent agents of tape, film and the like. Furthermore, from the viewpoint of being less slippery, the surface treating agent is also useful for anti-staining coatings on building materials, particularly floor materials and wall materials.

### EXAMPLES

Preparation Examples, Examples and Comparative Examples are given below for illustrating the invention, but the invention is not limited by Examples.

### [Preparation Example 1]

A reactor was charged with 288 ml of a 0.5 M THF solution of 3-butenylmagnesium bromide (1.4×10⁻¹ mol). With stirring, a mixture of 200 g (4.8×10⁻² mol) of a compound having the following formula (A): 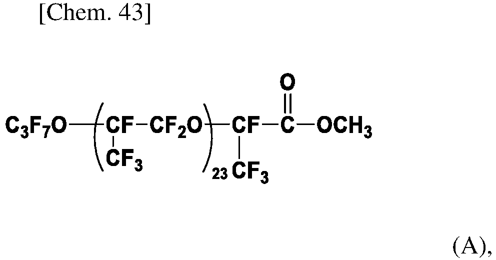 400 g of Asahiklin AC-6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 190 g of a fluoropolyether-containing polymer (numerical average molecular weight about 4,190) having the following formula (B).

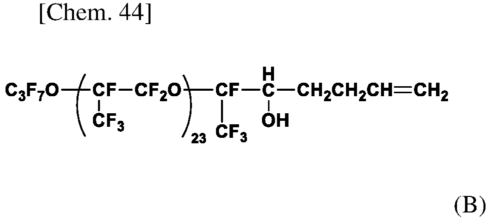

### ¹H-NMR

δ 1.4-1.7 (C-CH₂CH₂CH=CH₂) 2H
δ 1.9-2.2 (C-CH₂CH₂CH=CH₂) 2H
δ 2.4-2.6 (-CF-CH(OH)-CH₂-) 1H
δ 3.9-4.0 (-CF-CH(OH)-CH₂-) 1H
δ 4.7-4.9 (-CH₂CH=CH₂) 2H
δ 5.5-5.7 (-CH₂CH=CH₂) 1H

In a reactor, 100 g (2.4×10⁻² mol) of the compound having the following formula (B): 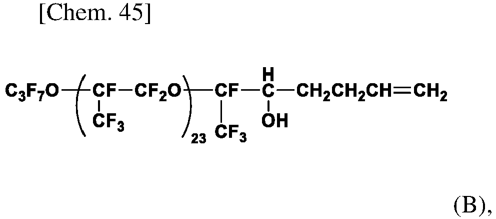 11.6 g (9.6×10⁻² mol) of allyl bromide and 0.18 g (4.8×10⁻⁴ mol) of tetrabutylammonium iodide were mixed. Subsequently, 19 g (1.4×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 92 g of a fluoropolyether-containing polymer (numerical average molecular weight about 4,230) having the following formula (C).

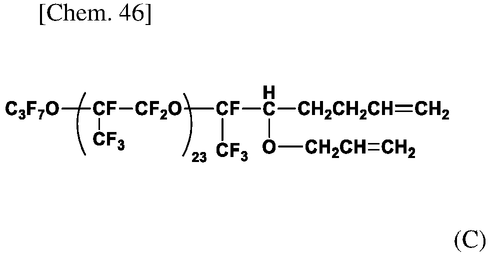

### ¹H-NMR

δ 1.4-1.7 (C-CH₂CH₂CH=CH₂) 2H
δ 1.8-2.2 (C-CH₂CH₂CH=CH₂) 2H
δ 3.6-4.1 (CF-CH-O-CH₂CH=CH₂) 3H
δ 4.7-5.1 (CF-CH-O-CH₂CH=CH₂, C-CH₂CH₂CH=CH₂) 4H
δ 5.6-5.8 (CF-CH-O-CH₂CH=CH₂, C-CH₂CH₂CH=CH₂) 2H

In a reactor, 80 g (1.9×10⁻² mol) of the compound having the following formula (C): 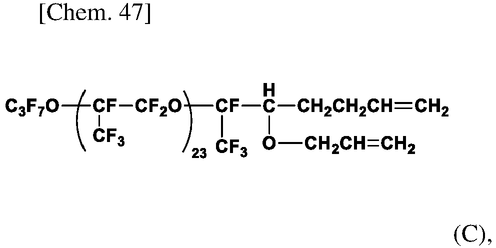 80 g of 1,3-bis(trifluoromethyl)benzene, 9.3 g (7.6×10⁻² mol) of trimethoxysilane, and 8.5×10⁻² g of a toluene solution of chloroplatinic acid/vinyl siloxane complex (containing 2.6×10⁻⁷ mol of Pt) were mixed. The solution was aged at 80°C for 24 hours. Thereafter, the solvent and unreacted reactants were distilled off in vacuum, obtaining 80 g of a liquid product.

On ¹H-NMR analysis, the compound was identified to have a structure of the following formula (D).

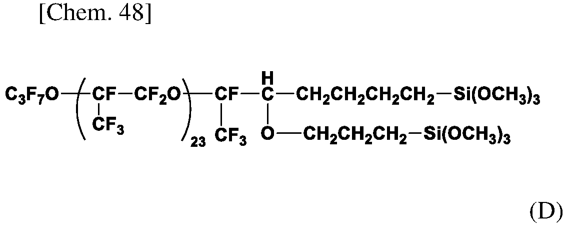

### ¹H-NMR

δ 0.4-0.6 (-O-CH₂CH₂CH₂-Si, C-CH₂CH₂CH₂CH₂-Si) 4H
δ 1.2-1.7 (-O-CH₂CH₂CH₂-Si, C-CH₂CH₂CH₂CH₂-Si) 8H
δ 3.3-3.7 (CF-CH(-O-CH₂CH₂CH₂-Si), -O-CH₂CH₂CH₂-Si, -Si(OCH₃)₃) 21H

### [Preparation Example 2]

A reactor was charged with 396 ml of a 0.5 M THF solution of 3-butenylmagnesium bromide (1.9×10⁻¹ mol). With stirring, a mixture of 100 g (6.6×10⁻² mol) of a compound (numerical average molecular weight about 1,506) having the following formula (E): 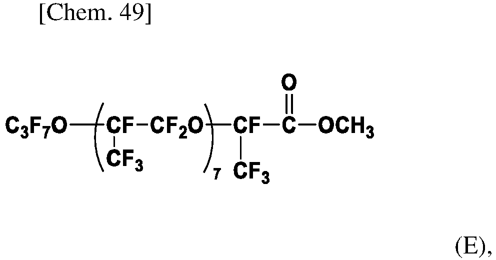 200 g of Asahiklin AC-6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 86 g of a fluoropolyether-containing polymer (numerical average molecular weight about 1,532) having the following formula (F).

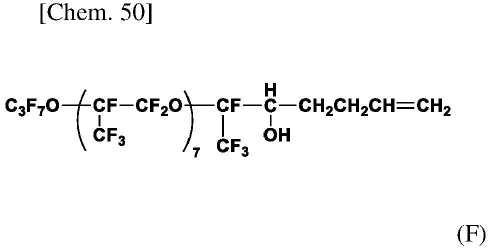

### ¹H-NMR

δ 1.4-1.7 (C-CH₂CH₂CH=CH₂) 2H
δ 1.9-2.2 (C-CH₂CH₂CH=CH₂) 2H
δ 2.4-2.6 (-CF-CH(OH)-CH₂-) 1H
δ 3.9-4.0 (-CF-CH(OH)-CH₂-) 1H
δ 4.7-4.9 (-CH₂CH=CH₂) 2H
δ 5.5-5.7 (-CH₂CH=CH₂) 1H

In a reactor, 80 g (5.2×10⁻² mol) of the compound having the following formula (F): 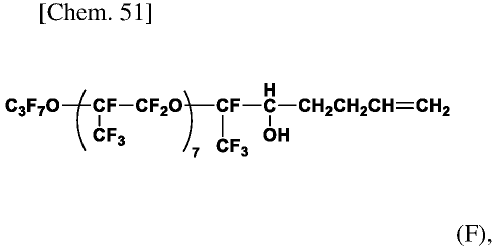 25 g (2.1×10⁻¹ mol) of allyl bromide and 0.38 g (1.0×10⁻³ mol) of tetrabutylammonium iodide were mixed. Subsequently, 42 g (3.1×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 77 g of a fluoropolyether-containing polymer (numerical average molecular weight about 1,572) having the following formula (G).

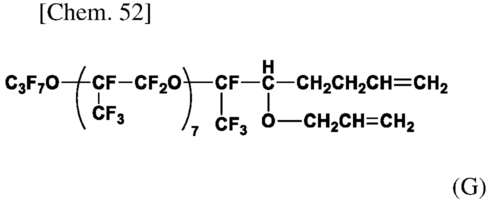

### ¹H-NMR

δ 1.4-1.7 (C-CH₂CH₂CH=CH₂) 2H
δ 1.8-2.2 (C-CH₂CH₂CH=CH₂) 2H
δ 3.6-4.1 (CF-CH-O-CH₂CH=CH₂) 3H
δ 4.7-5.1 (CF-CH-O-CH₂CH=CH₂, C-CH₂CH₂CH=CH₂) 4H
δ 5.6-5.8 (CF-CH-O-CH₂CH=CH₂, C-CH₂CH₂CH=CH₂) 2H

In a reactor, 50 g (3.2×10⁻² mol) of the compound having the following formula (G): 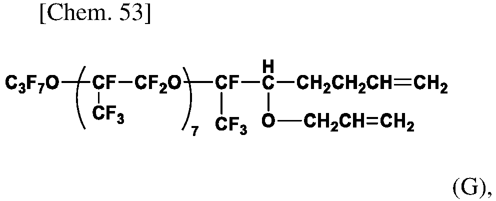 50 g of 1,3-bis(trifluoromethyl)benzene, 15.6 g (1.3×10⁻¹ mol) of trimethoxysilane, and 1.4×10⁻¹ g of a toluene solution of chloroplatinic acid/vinyl siloxane complex (containing 4.4×10⁻⁷ mol of Pt) were mixed. The solution was aged at 80°C for 24 hours. Thereafter, the solvent and unreacted reactants were distilled off in vacuum, obtaining 54 g of a liquid product.

On ¹H-NMR analysis, the compound was identified to have a structure of the following formula (H).

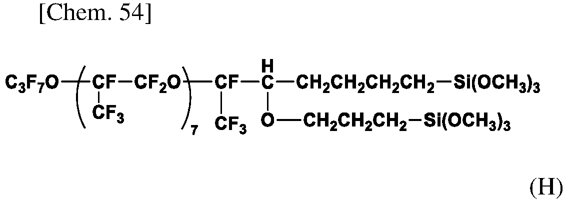

### ¹H-NMR

δ 0.4-0.6 (-O-CH₂CH₂CH₂-Si, C-CH₂CH₂CH₂CH₂-Si) 4H
δ 1.2-1.7 (-O-CH₂CH₂CH₂-Si, C-CH₂CH₂CH₂CH₂-Si) 8H
δ 3.3-3.7 (CF-CH(-O-CH₂CH₂CH₂-Si), -O-CH₂CH₂CH₂-Si, -Si(OCH₃)₃) 21H

### [Preparation Example 3]

A reactor was charged with 72 ml of a 0.5 M THF solution of 3-butenylmagnesium bromide (3.6×10⁻² mol). With stirring, a mixture of 100 g (1.2×10⁻² mol) of a compound having the following formula (I): 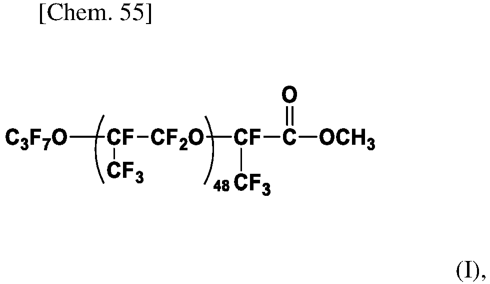 200 g of Asahiklin AC-6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 93 g of a fluoropolyether-containing polymer (numerical average molecular weight about 8,340) having the following formula (J).

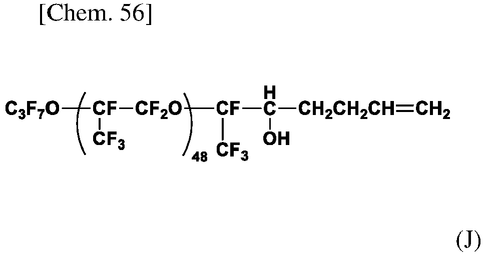

### ¹H-NMR

δ 1.4-1.7 (C-CH₂CH₂CH=CH₂) 2H
δ 1.9-2.3 (C-CH₂CH₂CH=CH₂) 2H
δ 2.4-2.6 (-CF-CH(OH)-CH₂-) 1H
δ 3.9-4.0 (-CF-CH(OH)-CH₂-) 1H
δ 4.7-4.9 (-CH₂CH=CH₂) 2H
δ 5.5-5.7 (-CH₂CH=CH₂) 1H

In a reactor, 80 g (9.6×10⁻³ mol) of the compound having the following formula (J): 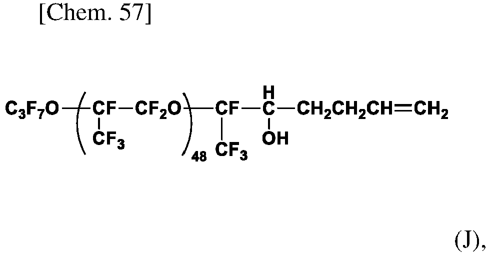 4.6 g (3.8×10⁻² mol) of allyl bromide and 0.07 g (1.9×10⁻⁴ mol) of tetrabutylammonium iodide were mixed. Subsequently, 7.7 g (5.8×10⁻² mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 73 g of a fluoropolyether-containing polymer (numerical average molecular weight about 8,380) having the following formula (K).

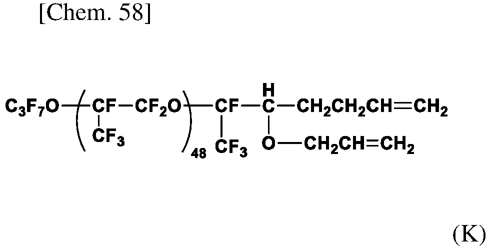

### ¹H-NMR

δ 1.4-1.7 (C-CH₂CH₂CH=CH₂) 2H
δ 1.8-2.3 (C-CH₂CH₂CH=CH₂) 2H
δ 3.6-4.1 (CF-CH-O-CH₂CH=CH₂) 3H
δ 4.7-5.1 (CF-CH-O-CH₂CH=CH₂, C-CH₂CH₂CH=CH₂) 4H
δ 5.6-5.8 (CF-CH-O-CH₂CH=CH₂, C-CH₂CH₂CH=CH₂) 2H

In a reactor, 50 g (6.0×10⁻³ mol) of the compound having the following formula (K): 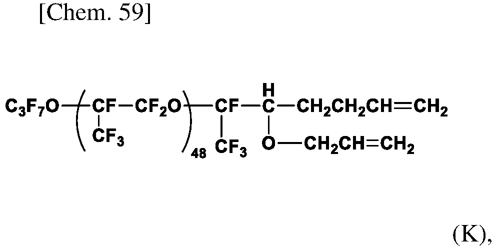 50 g of 1,3-bis(trifluoromethyl)benzene, 2.9 g (2.4×10⁻² mol) of trimethoxysilane, and 2.6×10⁻² g of a toluene solution of chloroplatinic acid/vinyl siloxane complex (containing 8.2×10⁻⁸ mol of Pt) were mixed. The solution was aged at 80°C for 24 hours. Thereafter, the solvent and unreacted reactants were distilled off in vacuum, obtaining 48 g of a liquid product.

On ¹H-NMR analysis, the compound was identified to have a structure of the following formula (L).

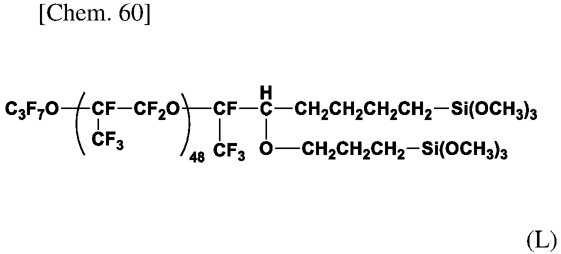

### ¹H-NMR

δ 0.4-0.6 (-O-CH₂CH₂CH₂-Si, C-CH₂CH₂CH₂CH₂-Si) 4H
δ 1.2-1.8 (-O-CH₂CH₂CH₂-Si, C-CH₂CH₂CH₂CH₂-Si) 8H
δ 3.3-3.7 (CF-CH(-O-CH₂CH₂CH₂-Si), -O-CH₂CH₂CH₂-Si, -Si(OCH₃)₃) 21H

### [Preparation Example 4]

In a reactor, 40 g (9.5×10⁻³ mol) of the compound having the following formula (C): 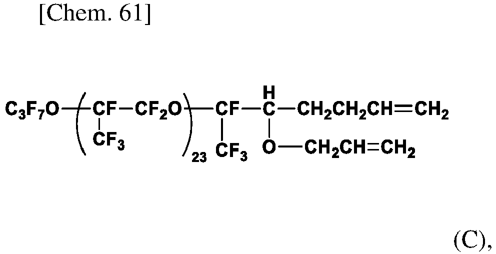 obtained in the same manner as in Preparation Example 1, 40 g of 1,3-bis(trifluoromethyl)benzene, 14 g (3.8×10⁻² mol) of a compound having the following formula (M): 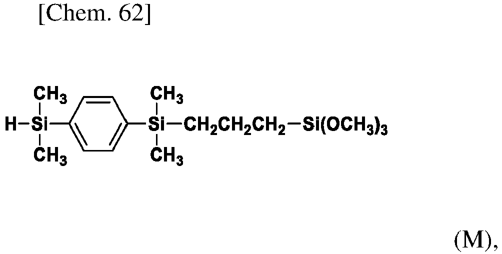 and 4.3×10⁻² g of a toluene solution of chloroplatinic acid/vinyl siloxane complex (containing 1.3×10⁻⁷ mol of Pt) were mixed. The solution was aged at 80°C for 24 hours. Thereafter, the solvent and unreacted reactants were distilled off in vacuum, obtaining 43 g of a liquid product.

On ¹H-NMR analysis, the compound was identified to have a structure of the following formula (N).

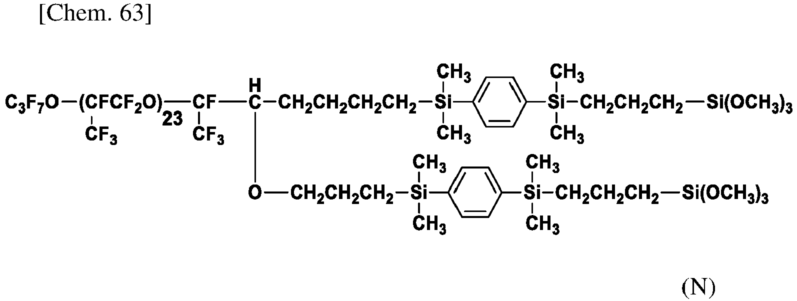

### ¹H-NMR

δ 0.0-0.2 (-O-CH₂CH₂CH₂-Si(CH₃)₂-C₆H₄-Si(CH₃)₂-, C-CH₂CH₂CH₂CH₂-Si(CH₃)₂-C₆H₄-Si(CH₃)₂-) 24H
δ 0.4-0.7 (-O-CH₂CH₂CH₂-Si-C₆H₄-Si-CH₂CH₂CH₂-Si, C-CH₂CH₂CH₂CH₂-Si-C₆H₄-Si-CH₂CH₂CH₂-Si) 12H
δ 1.2-1.8 (-O-CH₂CH₂CH₂-Si-C₆H₄-Si-CH₂CH₂CH₂-Si, C-CH₂CH₂CH₂CH₂-Si-C₆H₄-Si-CH₂CH₂CH₂-Si) 12H
δ 3.3-3.7 (CF-CH(-O-CH₂CH₂CH₂-Si), -O-CH₂CH₂CH₂-Si, -Si(OCH₃)₃) 21H
δ 7.0-7.5 (-O-CH₂CH₂CH₂-Si-C₆H₄-Si-CH₂CH₂CH₂-Si, C-CH₂CH₂CH₂CH₂-Si-C₆H₄-Si-CH₂CH₂CH₂-Si) 8H

### [Preparation Example 5]

A reactor was charged with 420 ml of a 0.5 M THF solution of 3-butenylmagnesium bromide (2.1×10⁻¹ mol). With stirring, a mixture of 200 g (3.5×10⁻² mol) of a compound (numerical average molecular weight about 5,700) having the following formula (O): 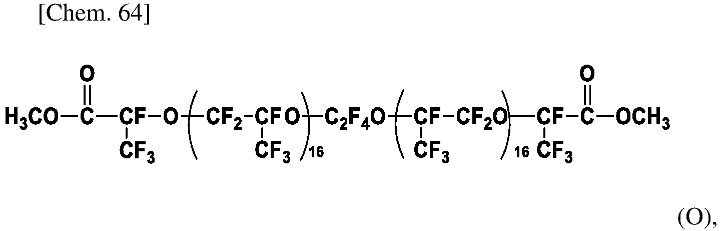 400 g of Asahiklin AC-6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 184 g of a fluoropolyether-containing polymer (numerical average molecular weight about 5,760) having the following formula (P).

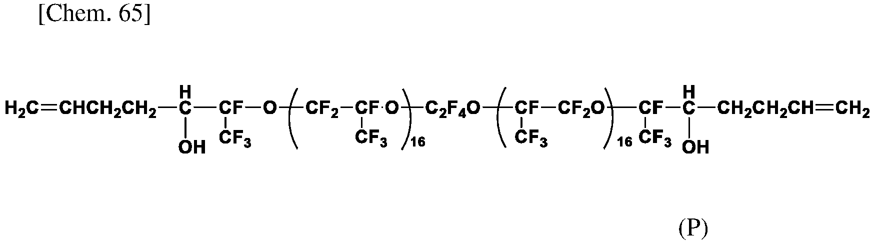

### ¹H-NMR

δ 1.3-1.7 (C-CH₂CH₂CH=CH₂) 4H
δ 1.9-2.2 (C-CH₂CH₂CH=CH₂) 4H
δ 2.4-2.6 (-CF-CH(OH)-CH₂-) 2H
δ 3.9-4.0 (-CF-CH (OH)-CH₂-) 2H
δ 4.7-5.0 (-CH₂CH=CH₂) 4H
δ 5.5-5.7 (-CH₂CH=CH₂) 2H

In a reactor, 100 g (1.7×10⁻² mol) of the compound having the following formula (P): 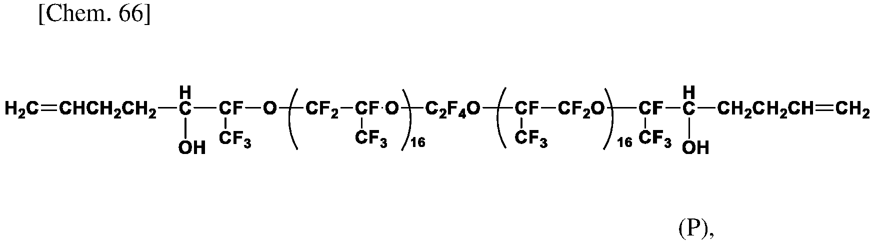 17 g (1.4×10⁻¹ mol) of allyl bromide and 0.25 g (6.8×10⁻⁴ mol) of tetrabutylammonium iodide were mixed. Subsequently, 27 g (2.0×10⁻¹ mol) of 30 wt% sodium hydroxide aqueous solution was added. The solution was heated at 50°C for 24 hours. At the end of heating, the solution was cooled to room temperature, and aqueous hydrochloric acid was added dropwise. The lower layer or fluoro compound layer was recovered by separatory operation and washed with acetone. The lower layer or fluoro compound layer after washing was recovered again. The residual solvent was distilled off in vacuum, yielding 89 g of a fluoropolyether-containing polymer (numerical average molecular weight about 5,840) having the following formula (Q).

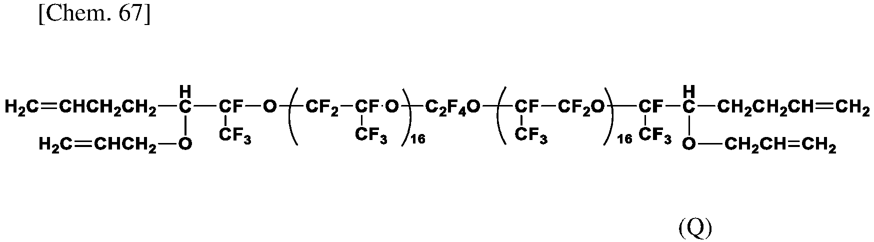

### ¹H-NMR

δ 1.3-1.7 (C-CH₂CH₂CH=CH₂) 4H
δ 1.8-2.2 (C-CH₂CH₂CH=CH₂) 4H
δ 3.6-4.1 (CF-CH-O-CH₂CH=CH₂) 6H
δ 4.7-5.2 (CF-CH-O-CH₂CH=CH₂, C-CH₂CH₂CH=CH₂) 8H
δ 5.6-5.8 (CF-CH-O-CH₂CH=CH₂, C-CH₂CH₂CH=CH₂) 4H

In a reactor, 70 g (1.2×10⁻² mol) of the compound having the following formula (Q): 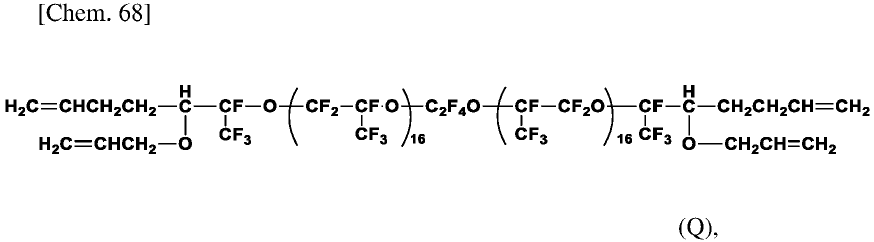 70 g of 1,3-bis(trifluoromethyl)benzene, 12 g (9.6×10⁻² mol) of trimethoxysilane, and 1.0×10⁻¹ g of a toluene solution of chloroplatinic acid/vinyl siloxane complex (containing 3.2×10⁻⁷ mol of Pt) were mixed. The solution was aged at 80°C for 24 hours. Thereafter, the solvent and unreacted reactants were distilled off in vacuum, obtaining 72 g of a liquid product.

On ¹H-NMR analysis, the compound was identified to have a structure of the following formula (R).

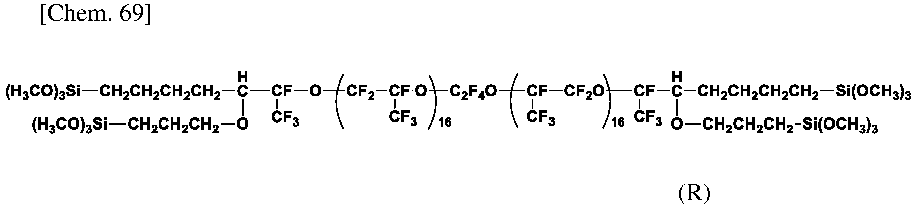

### ¹H-NMR

δ 0.3-0.6 (-O-CH₂CH₂CH₂-Si, C-CH₂CH₂CH₂CH₂-Si) 8H
δ 1.2-1.6 (-O-CH₂CH₂CH₂-Si, C-CH₂CH₂CH₂CH₂-Si) 16H
δ 3.3-3.8 (CF-CH(-O-CH₂CH₂CH₂-Si), -O-CH₂CH₂CH₂-Si, -Si(OCH₃)₃) 42H

For comparative examples, the following polymers were used.

### Comparative Example 1:

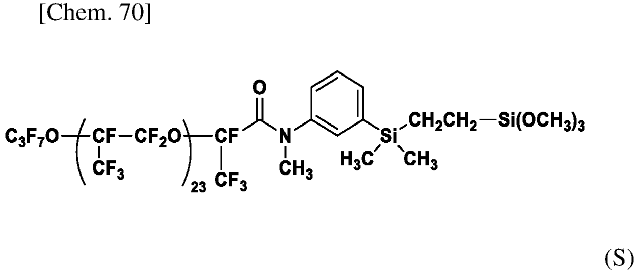

### Comparative Example 2:

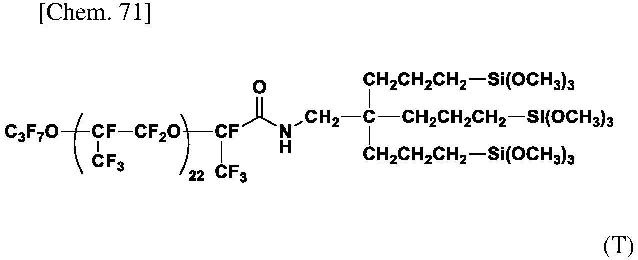

### Comparative Example 3:

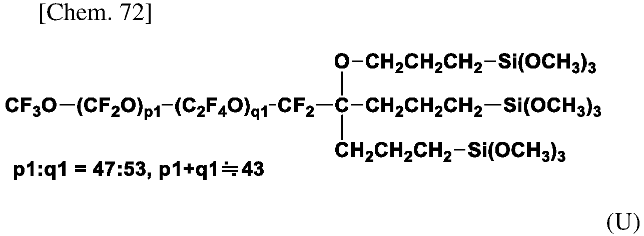

### [Examples 1 to 5, Comparative Examples 1 to 3]

### Preparation of surface treating agent and formation of cured film

Surface treating agents were prepared by dissolving the fluoropolyether-containing polymers of the structure having formulae (D), (H), (L), (N) and (R) obtained in Preparation Examples 1 and 5 or the polymers having formulae (S), (T) and (U) (Comparative Examples 1 to 3) in Novec 7200 (ethyl perfluorobutyl ether by 3M) in a concentration of 20 wt%. Onto glass having an outermost surface treated with SiO₂ of 10 nm (Gorilla by Corning), 5 µl of each surface treating agent was deposited by vacuum evaporation under conditions including pressure 3.0×10⁻³ Pa and heating temperature 500°C. The deposit was cured in an atmosphere of 25°C and humidity 50% for 12 hours, obtaining a cured film of 10 nm thick.

### Evaluation of water/oil repellency

### [Evaluation of initial water/oil repellency]

Using a contact angle meter Drop Master (Kyowa Interface Science Co., Ltd.), the cured film on glass was measured for a contact angle with water as an index of water repellency (droplet 2 µl, temperature 25°C, humidity 50%). The results (initial contact angle with water) are shown in Table 1.

At the initial, all the films of Examples and Comparative Examples showed excellent water repellency.

### [Evaluation of slipperiness]

For the glass on which the cured film was formed prepared above, the dynamic friction coefficient with respect to a nonwoven fabric was evaluated by the following method as evaluation of slipperiness. The dynamic friction coefficient with respect to a nonwoven fabric of the glass on which the cured film was formed was measured under the conditions of a load of 100 gf and a tensile speed of 500 mm/min using a surface tester TYPE: 14FW (manufactured by Shinto Scientific Co., Ltd.) in accordance with ASTM D1894. The results (dynamic friction coefficient) are shown in Table 1.

### Slipperiness

Load: 100 gf
Stroke: 100 mm
Contact area: 1 × 3 cm²
Nonwoven fabric: BEMCOT (manufactured by Asahi Kasei Corporation)

### [Evaluation of abrasion resistance]

Using a friction tester (Shinto Scientific Co., Ltd.), the cured film on glass was rubbed under the conditions shown below. Thereafter, the cured film was similarly measured for a contact angle with water (water repellency), the number of cycles of contact angle with water of less than 100° was defined as evaluation of abrasion resistance (10,000 cycles at maximum). The test environmental conditions included temperature 25°C and humidity 50%. The results (the number of steel wool abrasion, the number of eraser abrasion) are shown in Table 1.

### Steel wool abrasion resistance

Steel wool: BONSTER #0000
Contact area: 1 cm²
Moving distance (one way): 40 mm
Moving speed: 4,800 mm/min
Load: 1 kg/1 cm²

### Eraser abrasion resistance

Eraser: MINOAN
Contact area: 6 mm²φ
Moving distance (one way): 40 mm
Moving speed: 3,200 mm/min
Load: 1 kg/6 mm²φ

**[Table 1]**

| | Polymer | Initial contact angle with water (°) | Dynamic friction coefficient | Number of steel wool abrasion (cycles) | Number of eraser abrasion (cycles) |
|---|---|---|---|---|---|
| Example 1 | Preparation Example 1 Formula (D) | 116 | 0.20 | 10,000 | 10,000 |
| Example 2 | Preparation Example 2 Formula (H) | 111 | 0.22 | 10,000 | 9,000 |
| Example 3 | Preparation Example 3 Formula (L) | 117 | 0.18 | 10,000 | 10,000 |
| Example 4 | Preparation Example 4 Formula (N) | 114 | 0.21 | 10,000 | 10,000 |
| Example 5 | Preparation Example 5 Formula (R) | 110 | 0.26 | 8,000 | 7,000 |
| Comparative Example 1 | Formula (S) | 115 | 0.20 | 4,000 | 2,000 |
| Comparative Example 2 | Formula (T) | 115 | 0.21 | 5,000 | 3,000 |
| Comparative Example 3 | Formula (U) | 113 | 0.03 | 10,000 | 3,000 |

In the polymers of Examples 1 to 5 and Comparative Examples 1 and 2, since its main chain is composed of a -CF(CF₃)CF₂O- unit, the polymers have a high dynamic friction coefficient and are less slippery. On the other hand, in the polymer of Comparative Example 3, its main chain is composed of -(CF₂)ₚ₁(CF₂CF₂O)_{q1}-, and the polymer has a low dynamic friction coefficient due to its flexibility and is slippery. In addition, since the polymers of Comparative Examples 1 and 2 had an amide group as a polar group in the molecule, the polymers had poor steel wool abrasion resistance and poor eraser abrasion resistance. The polymers of Examples 1 to 5 and Comparative Example 3 did not have a polar group in the molecule, and had two or more reactive groups adhered to the substrate, and therefore firmly adhered to the substrate, and had good steel wool abrasion resistance. However, the polymer of Comparative Example 3 has improved steel wool abrasion resistance, but has poor eraser abrasion resistance due to its flexibility because the main chain is composed of -(CF₂)ₚ₁(CF₂CF₂O)_{q1}-. On the other hand, it was found that the polymers having an end structure of Examples 1 to 5 have good eraser abrasion resistance, in addition to steel wool resistance, as compared with the polymer of Comparative Example 3, and the polymers have both the steel wool abrasion resistance and the eraser abrasion resistance at the same time despite having a high dynamic friction coefficient.

## Claims

1. A surface treating agent comprising a fluoropolyether-containing polymer having the following general formula (1):
Rf-[CH(V)₂]_{α} (1)
wherein Rf is a monovalent or divalent fluorooxyalkylene-containing polymer residue containing a group having -(C₃F₆O)_{d}- (repeating unit C₃F₆O has a branched structure, and d is an integer of 2 to 200), V is independently a monovalent group having a hydroxy-containing silyl group or hydrolyzable silyl group at an end and free of polar group other than the hydroxy-containing silyl group and the hydrolyzable silyl group, and α is 1 or 2,
and/or a partial (hydrolytic) condensate thereof.

2. The surface treating agent comprising a fluoropolyether-containing polymer of claim 1 having the following general formula (2): 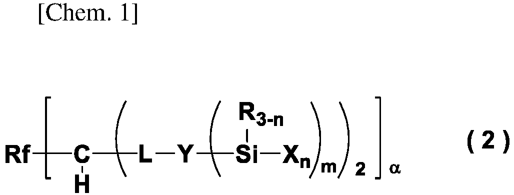 wherein Rf is a monovalent or divalent fluorooxyalkylene-containing polymer residue containing a group having -(C₃F₆O)_{d}- (repeating unit C₃F₆O has a branched structure, and d is an integer of 2 to 200), L is each independently a single bond or a divalent heteroatom, Y is each independently a di- to hexavalent hydrocarbon group, and may have a silicon atom and/or siloxane bond, R is independently a C₁-C₄ alkyl group or a phenyl group, X is independently a hydroxy or hydrolyzable group, n is an integer of 1 to 3, m is an integer of 1 to 5, and α is 1 or 2,
and/or a partial (hydrolytic) condensate thereof.

3. A surface treating agent comprising the fluoropolyether-containing polymer of claim 2 wherein α in formula (2) is 1, and Rf is a group having the following general formula (3), and/or a partial (hydrolytic) condensate thereof, 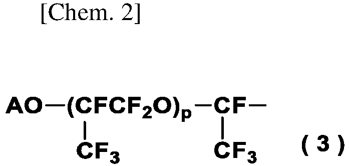 wherein A is fluorine atom, hydrogen atom, or a fluoroalkyl group terminated with a -CF₃ group, and p is an integer of 1 to 200.

4. A surface treating agent comprising the fluoropolyether-containing polymer of claim 2 or 3 wherein in formula (2), two L's are present at one end of the molecular chain when α = 1, and two L's are present at each of both ends of the molecular chain when α = 2; one L is an oxygen atom, and the other L is a single bond, and Y is each independently a group selected from the group consisting of a C₃-C₁₀ alkylene group, an alkylene group containing C₆-C₈ arylene group, a divalent group having alkylene groups bonded via a silalkylene structure or silarylene structure, and a di- to tetravalent group having a C₂-C₁₀ alkylene group bonded to a bond of a di- to tetravalent linear organopolysiloxane residue of 2 to 10 silicon atoms or a di- to tetravalent branched or cyclic organopolysiloxane residue of 3 to 10 silicon atoms, and/or a partial (hydrolytic) condensate thereof.

5. A surface treating agent comprising the fluoropolyether-containing polymer of any one of claims 2 to 4 wherein in formula (2), X is each independently selected from the group consisting of a hydroxy group, C₁-C₁₀ alkoxy group, C₂-C₁₀ alkoxyalkoxy group, C₁-C₁₀ acyloxy group, C₂-C₁₀ alkenyloxy group, and halogen, and/or a partial (hydrolytic) condensate thereof.

6. A surface treating agent comprising the fluoropolyether-containing polymer of any one of claims 2 to 5 wherein the polymer having formula (2) is selected from polymers having the following formulae, and/or a partial (hydrolytic) condensate thereof, 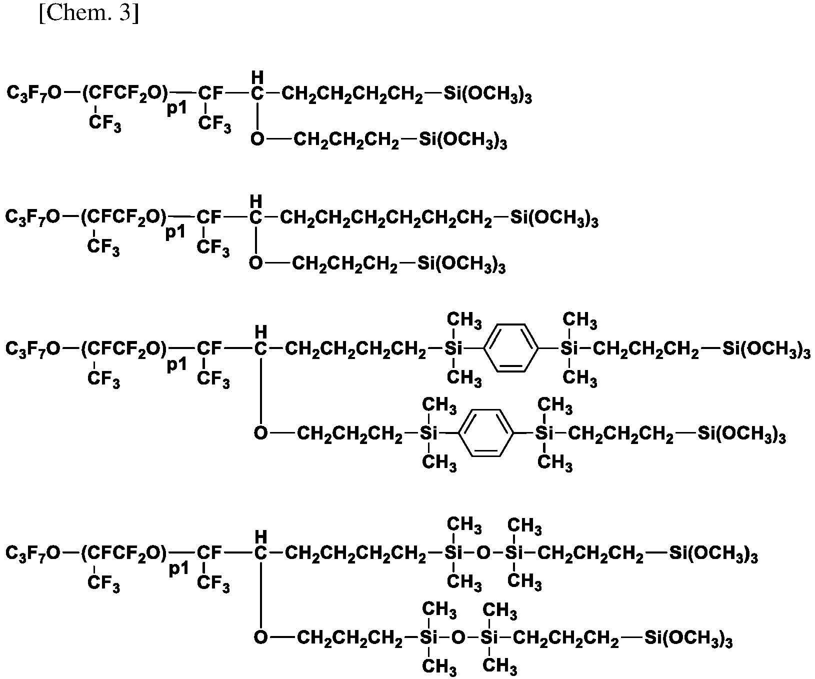 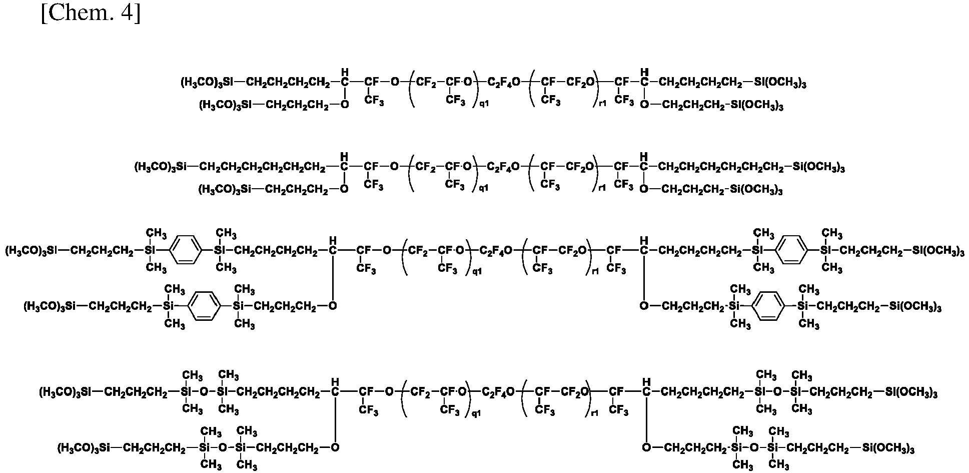 wherein p1, q1 and r1 each are an integer of 1 to 199, and q1 + r1 is an integer of 2 to 200.

7. An article having a surface treated with the surface treating agent of any one of claims 1 to 6.
